# EUROPEAN PATENT SPECIFICATION

(11) **EP 2 650 313 B1**
(45) Date of publication and mention of the grant of the patent: **02.03.2016**
(21) Application number: 11846459.3
(22) Date of filing: 09.12.2011
(51) Int. Cl.: C08F 4/52, C08F 2/04, C08F 36/04

(54) **NEODYMIUM BASED HOMOGENEOUS PHASE RARE EARTH CATALYST AND USE THEREOF**
SELTENERDKATALYSATOREN MIT HOMOGENEN PHASEN AUF NEODYMBASIS UND VERWENDUNG DAVON
CATALYSEUR DE TERRE RARE À PHASE HOMOGÈNE À BASE DE NÉODYME ET SON UTILISATION

(30) Priority: 09.12.2010 CN 201010594870; 09.12.2010 CN 201010594908; 09.12.2010 CN 201010594914; 09.12.2010 CN 201010594944; 09.12.2010 CN 201010594959
(43) Date of publication of application: 16.10.2013
(73) Proprietor: China Petroleum & Chemical Corporation, Beijing 100728 (CN); Beijing Research Institute of Chemical Industry, China Petroleum & Chemical Corporation, Chaoyang District Beijing 100013 (CN)
(72) Inventor: ZHANG, Jie, Beijing 102500 (CN); LI, Chuanqing, Beijing 102500 (CN); LIANG, Aimin, Beijing 102500 (CN); TAN, Jinmei, Beijing 102500 (CN); ZHANG, Guojuan, Beijing 102500 (CN); ZHAO, Jiangwei, Beijing 102500 (CN); XU, Lin, Beijing 102500 (CN); YU, Guozhu, Beijing 102500 (CN); OUYANG, Sufang, Beijing 102500 (CN); YANG, Liangliang, Beijing 102500 (CN); SUN, Wei, Beijing 102500 (CN); XIN, Yishuang, Beijing 102500 (CN)
(74) Representative: Hoffmann Eitle
(86) International application number: PCT/CN2011/083777
(87) International publication number: WO 2012/075964

(56) References cited:
- CN-A- 1 347 923
- CN-A- 86 103 327
- CN-C- 100 448 898
- US-A1- 2003 187 162
- US-B2- 6 992 157

## Description

### Technical Field

The present invention relates to a rare-earth catalyst, specifically, to a new neodymium based homogeneous phase rare-earth catalyst, preparation thereof and use thereof. The neodymium based homogeneous phase rare-earth catalyst provided by the present invention is especially suitable as a catalyst for conjugated diene polymerization, which is used for synthesizing poly-conjugated diene elastomers with high cis-structure content.

### Technical Background

Cis-1,4-isoprene rubber (IR) is called "synthesized natural rubber" because its structure and properties are similar to that of natural rubber. Especially, when the cis-structure content of IR is more than 99%, its properties can be matched with those of natural rubber. The rare-earth catalyst has high activity and high directivity, so it is the most preferred catalyst in synthesizing IR. Currently, most catalysts in the disclosed technology are heterogeneous phase catalysts, such as rare-earth chloride system (CN1834121A and CN1861649A) and rare-earth phosphate (phosphonate) system (CN1484657A and CN1479754A). The stability of a heterogeneous phase catalyst is poor, so the storage and transportation of a heterogeneous phase catalyst are difficult. Multi-activity centers possibly exist in a heterogeneous phase catalyst, and polymers with wide molecular weight distribution are frequently obtained, which leads to an increase in viscosity of the polymer system, and further results in difficulties in production processes such as heat transfer, transportation, glue spraying, condensation and so on. In addition, it is difficult to measure a heterogeneous phase catalyst accurately, which makes the polymerization process and product structures difficult to be controlled or mastered. Therefore, it is difficult to use a heterogeneous phase catalyst in industrialization.

Polymers (such as polybutadiene and polyisoprene) with high cis-structure content (>96%) and high molecular weight can be synthesized in directional polymerization of conjugated dienes in the presence of a rare-earth catalyst. The microstructure and physical and mechanical properties of polyisoprene rubber which is catalytically synthesized by a rare-earth catalyst, are better than that synthesized by a titanium based catalyst, and the microstructure and macroscopic properties thereof are the nearest to that of natural rubber, so polyisoprene rubber catalytically synthesized by a rare-earth catalyst is an ideal substitute of natural rubber. When compared with polyisoprene rubber catalytically obtained by a conventional titanium, cobalt or nickel based catalyst, polyisoprene rubber synthesized by a rare-earth catalyst has better raw rubber strength and vulcanizate properties, such that it meets the requirement of a car's high speed travel, so it can be used to prepare tyres of high properties.

The composition and preparation conditions of a catalyst can determine the activity of the catalyst and the structure of the synthesized polymers. In the Collection of the Rare-earth Catalyst Synthesized Rubber (1980, Science Press, P72-82), it mentions that the heterogeneous phase catalyst composed of neodymium naphthenate, triisobutyl aluminum and diethyl aluminum chloride can be used for synthesizing polyisoprene with cis-1,4-structure content less than 95%, but as the content of cis-1,4-structure content therein is low, the properties of the synthesized polymers are unsatisfactory. In addition, as a heterogeneous phase catalyst system may have multi-activity centers, the problems such as poor stability, controlling difficulty in catalytic processes and polymerization processes are present. The above problems can be resolved by obtaining a homogeneous phase catalyst through changing the catalyst composition and preparation conditions. A homogeneous phase catalyst can be obtained under a special addition manner and preparation conditions by introducing conjugated dienes into the ternary catalyst system (CN1347923A and CN101045768A). When it is used for isoprene polymerization, the dosage of the catalyst is large, the molar ratio of neodymium carboxylate to monomer is commonly higher than 3.4×10⁴, and the cis-structure content of the obtained polyisoprene is relatively low, within 96.1-97.2%. Halogenated hydrocarbons such as tert-butyl chloride, benzyl chloride and allyl chloride and halogenated silanes are used as halogen donors, which are then combined with a rare-earth carboxylate and an alkylaluminum to form a ternary catalyst system, which can be used for preparing a homogeneous phase catalyst in condition that the ratio of Cl/Nd is less than 5 (CN85101899A and CN1296982A), and the cis-structure content in the prepared polyisoprene is low, about 96%. Alkyl halides such as trichloroethane, trichloromethane and 1,4-di(2-chloro-propyl) benzene and halogenated carboxylates are used as halogen donors, and are combined with rare-earth carboxylates, alkylaluminums and conjugated alkenes or carboxylic acids to form a quaternary catalyst system (CN1840552A), which can form a homogeneous phase catalyst in condition that the ratio of Cl/Nd is within a relative wider range (Cl/Nd=1-50), but the polyisoprene with cis-structure content only 95.3% is obtained.

CN100448898C discloses a homogeneous phase catalyst composed of neodymium carboxylate, alkylaluminum, organic halogenated hydrocarbons and conjugated alkenes or carboxylic acid, and said homogeneous phase catalyst can be used in the synthesis of polyisoprene with a cis-1,4-structure content of 95.32% and a molecular weight of 5.75×10⁵ under a catalyst component ratio of 1:1-30:1-50:0-17/6. As the cis-1,4-structure content is low and the molecular weight is low, the polyisoprene products obtained are not suitable for tyre products.

US2005/0137338A1 mentions that adding a small amount of diene monomers in the aging process of a catalyst is beneficial to improve the activity of the catalyst. The catalyst is composed of neodymium carboxylate, an alkylaluminum (triisobutyl aluminum or diisobutyl aluminum hydride) and a halogen. The catalyst is prepared in an addition order of neodymium carboxylate, an alkylaluminum and a halogen, and the cis-1,4-structure content of the synthesized polyisoprene rubber is 98.0 to 99.5%, and the molecular weight distribution thereof is 1.0-2.5. However, because a halogen (such as chlorine) is used in the preparation process of the catalyst, the equipments are corroded heavily, which results in environmental pollution.

CN101045768A discloses a homogeneous phase catalyst which is composed of neodymium carboxylate or phosphorus/neodymium phosphonate, an alkylaluminum, a chloride and conjugated dienes, wherein said catalyst is prepared by the following addition order: first, the mixture solution of neodymium carboxylate or phosphorus/neodymium phosphonate, conjugated dienes and an alkylaluminum is formed, and then a chloride is added into the mixture. Polyisoprene with a cis-1,4-structure content higher than 96% and a molecular weight distribution index less than 3 can be synthesized. However, the cis-1,4-structure content of the above Polyisoprene is still less than that of titanium based polyisoprene rubber or natural rubber (>98%).

In CN1347923A, it mentions that, after neodymium neodecanoate and a halogen compound are brought into contact and reacts with each other, diisobutyl aluminum hydride is added into it, but precipitation appears when the catalyst which is obtained after an aging reaction is placed at room temperature for 10h, which means that the obtained catalyst is a heterogeneous catalyst. The following problems in the prior art cannot be resolved: when halogen compounds are contacted with neodymium carboxylate before an alkylaluminum, a stable homogeneous phase rare-earth catalyst cannot be obtained.

Currently, solution polymerization is commonly used for the coordination polymerization of conjugated dienes in the industry. The structure features of polymers lead to an increase in the viscosity of the polymer solution in the synthesis process, which is disadvantageous for the heat and mass transfer and material transport in the polymerization. In order to solve the above problem, the requirement for industrial equipments is high and the energy consumption is increased. Especially, as to rare-earth butadiene rubber and rare-earth isoprene rubber which are developed rapidly in China, the polymer molecular chains do not have a branched structure, the linearity thereof is high, and the molecular weight thereof is high. Such structure features can endow the products with better properties, but also result in larger viscosity of gel solution in the synthesis process, in which case a higher requirement for industrial production is put forward.

As to the high viscosity of a polymer solution, physical methods or chemical methods can be used to reduce the viscosity. A chemical method means reducing the viscosity of the polymer solution by changing the structure of polymer chains (such as branching and reducing the molecular weight) in the synthesis process. Reducing the viscosity by a chemical method commonly brings about the change of the polymer structure, which further affects the properties of polymers. Viscosity reduction by a physical method means reducing the viscosity of the polymer solution by the manners such as additional additives, which does not change the polymer structure, and will not affect the properties of the products by selecting suitable additives and dosage.

Surfactants such as carboxylic acid (or a carboxylate) and sulfonic acid (or a sulfonate) are widely used in various fields such as reducing the viscosity of heavy oil, ore flotation, fuel and pesticides. For example, in CN1071690A, sodium oleate, fatty acid alkanol amide, alkylphenol polyoxyethylene ether, a penetrant and water are used to prepare a viscosity reducing agent for high heavy oil. In CN1093099A, polyoxyethylene oleate, polyoxyethylene phenyl ether, polyphenol and water are used to prepare a viscosity reduction agent for high heavy oil. In CN1147007A, a natural mixed carboxylate is used as an oil displacement agent. However, the use of the carboxylic acid (or a carboxylate), or carboxylic acid (or a sulfonate) and so on for reducing the viscosity of a polymer solution has not been reported.

During the solution polymerization process for preparing rare-earth isoprene rubber, the premixing state of polymerization materials (including isoprene monomers, the solvent and the catalyst) will directly influence the rate of subsequent polymerization, the amount of catalyst used, the content of cis-configuration, the molecular weight and the molecular weight distribution of the rubber product obtained. Therefore, before the solution polymerization process of isoprene monomers, a good mass transfer environment needs to be created, to ensure that polymerization materials are mixed with each other thoroughly and a high uniform mixture is formed.

In the prior art, as to the solution polymerization process for preparing rare-earth isoprene rubber, the conventional material premixing process is generally carried out with a static mixer. However, since in a static mixer a fluid retention area is always formed at the outlet thereof, the flow rate distribution of materials will be uneven, causing a low disturbing effect. Consequently, the mixing effect cannot be satisfactory. Currently, the stirring mixer with a relatively complex structure is also used as a pre-mixer for raw materials. In this mixer, under the action of stirring blades, the turbulence of materials is increased, and thus the mixing effect is enhanced. However, due to the characteristics of stirring blades, the flow field inside the mixer has an uneven distribution, and a dead mixing zone of large volume is easily formed. Thus the final mixing effect cannot be satisfactory either. To improve the mixing effect, internal components are often needed to be provided, which makes the structure inside the mixing tank more complicated and the energy consumption increased. Along with the rotation components, the equipment becomes difficult to be maintained. In addition, the structural design of a stirring mixer is an important factor that would influence the premixing effect. In the premixing process, not only is the catalyst required to be dispersed in the material system in a high uniform manner, but also the mixing in the upper region and lower region of the whole mixer should be uniform as largely as possible. However, a traditional stirring mixer generally cannot meet the requirements.

US005397179A discloses equipment for liquid mixing, said equipment being tubular turbulent mixing equipment with a diffusion-contraction section. Kauchuk Company in Russia built the first 10000-ton class isoprene rubber production equipment in the world in 2003, wherein the above tubular turbulent mixing equipment in said America patent is used to mix raw materials. Such mixer substantially matches with a static mixer. It is different just in that the materials therein undergo repeated diffusion and contraction, which leads to an increase of the turbulent diffusivity and enhances the mixing between the materials, and thus the mixing is more uniform. But the defect of such liquid mixing equipment is it is difficult to be processed or manufactured.

In the prior art, another premixing process for material premixing uses a static mixer and a stirring tank that are connected to each other in series. CN201415984Y disclosed such a premixer for preparing rare-earth isoprene rubber, which includes a pipe-type high speed mixing device and a premixing tank connected to each other in series. After being premixed in the premixer, polymerization materials can reach a high microcosmic uniform mixing state, and then flow into the polymerization reactor. In this way, the catalytic effect of the catalyst can be increased, the branching degree of the product can be reduced, so that the molecular weight can be distributed more evenly, finally increasing the product quality of isoprene rubber. However, the premixer has a defect that the average resident time of materials in the premixing tank is relatively long, e.g., 20-30 min. And after flowing through several in-serial polymerization reactors and reacting with the substances therein, the materials can only have a final conversion rate of 85-90wt%. Consequently, productivity of this pre-mixer is relatively low.

Therefore, the composition and preparation conditions of a catalyst determine the activity of the catalyst and the structure of the synthesized polymers. A neodymium based rare-earth catalyst with high activity can be obtained and conjugated diene polymer products with higher cis-structure content can be synthesized by selecting the catalyst component, formula and preparation conditions Therefore, further optimizing the synthesis process and developing new catalysts for conjugated diene polymerization are worth of attention. Next, as the solution polymerization process for preparing rare-earth isoprene rubber, a suitable physical viscosity reduction method is also needed to reduce the viscosity of the conjugated diene polymer solution, which is beneficial for the smooth production of industrial equipment, and decreases the energy consumption by a large extent. It meets the development requirement for energy saving and low carbon development in modem industry. In addition, as to the solution preparation process for preparing rare-earth isoprene rubber, it needs to further improve the premixing process of polymerization reactants, further improve the quality of the obtained rare-earth isoprene rubber products, as well as improve the production ability and reduce the energy consumption.

### Summary of the Invention

The present invention provides a new neodymium based rare-earth catalyst according to the research into the prior art of conjugated diene polymerization. Said catalyst has such advantages as a homogeneous phase, good stability and high directionality, and said catalyst has relative higher catalytic activity. When said catalyst is used for conjugated diene polymerization, a poly-conjugated diene elastomer with a cis-structure content higher than 98% is prepared. The present invention also provides s process for synthesizing conjugated diene polymers based on using the above said catalyst, wherein an ionic surfactant, especially an anionic surfactant, is used to reduce the viscosity of the polymer solution effectively, and a premixing operation is used to improve catalytic efficiency.

According to one aspect of the present invention, it provides a neodymium based homogeneous phase rare-earth catalyst prepared by a process comprising the following steps:
1) in an inert solvent, preparing a mixture solution comprising a neodymium carboxylate compound as component a, a halogen-containing compound as component c, and a conjugated diene as component d;
2) adding an organo-aluminum compound as component b to the mixture obtained from step 1) to obtain said neodymium based homogeneous phase rare-earth catalyst,
wherein said organo-aluminum compound is selected from alkylaluminums with a general formula of AlR₃ and alkylaluminum hydrides with a general formula of AlHR₂, in which R is a C₁-C₆ linear or branched alkyl group, and the molar ratio of the components in the catalyst is 1:5-30:2-10:35-65 in view of a:b:c:d.

In the above catalyst, the molar ratio of the components in the catalyst is preferably 1:10-25:2-4:37-60 in view of a:b:c:d.

In the above catalyst, said neodymium carboxylate compound is a neodymium C₁-C₂₀ carboxylate; preferably a neodymium C₆-C₁₀ carboxylate and more preferably neodymium naphthenate, neodymium octanoate, neodymium isooctanoate, neodymium pelargonate, neodymium neodecanoate or neodymium decanoate.

In the above catalyst, said organo-aluminum is selected from trimethyl aluminum, triethyl aluminum, tripropyl aluminum, tributyl aluminum, tripentyl aluminum, trihexyl aluminum, diethyl aluminum hydride and dibutyl aluminum hydride, preferably selected from tributyl aluminium and dibutyl aluminum hydride and more preferably selected from triisobutyl aluminum and diisobutyl aluminium hydride.

In a specific example of the above catalyst, said halogen-containing compound is selected from alkylaluminum chlorides with a general formula of AlR₂X, sesquialkyl aluminum halides with a general formula of Al₂R₃X₃, wherein R is an ethyl, propyl, isopropyl, butyl, isobutyl or tertbutyl group, X is bromine or chlorine, preferably selected from diethyl aluminum chloride, sesquiethyl aluminum chloride and diisobutyl aluminum chloride.

In another specific example of the above catalyst, said halogen-containing compound is selected from halogenated hydrocarbons with a general formula of RX, silicon-containing halides, halogens or a mixture thereof, wherein R is a C₁-C₆ alkyl group, X is bromine or chlorine, preferably selected from halogenated methylsilane, silicon tetrachloride, sesquiisobutyl aluminum chloride, liquid bromine, chlorine gas, benzyl chloride, benzyl bromide and tert-butyl chloride.

In the above catalyst, said conjugated diene, i.e., component d means any monomers with moleculars having a conjugated double bonds. The examples thereof comprises but not be limited to C₄-C₆, conjugated dienes, preferably selected from butadiene, isoprene, 1,3-pentadiene, 1,3-hexadiene and 2,3-dimethyl butadiene, more preferably selected from butadiene and isoprene, and most preferably isoprene.

In the above catalyst, there is no special limitation on the inert solvent used in the preparation process, saturated aliphatic hydrocarbons or alicyclic hydrocarbon solvents that are commonly used in the field can be selected, wherein said saturated aliphatic hydrocarbons or alicyclic hydrocarbon solvents are, and C₅-C₁₀ alkanes or cycloalkanes are often selected, such as pentane, isopentane, hexane, cyclohexane, heptane, octane or mixture thereof.

In the above catalyst, the following components can be added into said inert solvent according to the actual needs so as to change the catalyst activity and adjust the molecular weight and molecular weight distribution of polymers: aromatic compounds such as benzene, toluene, ethylbenzene, xylene and isopropylbenzene, and ether compounds such as diethyl ether and diphenyl ether. Said component can be added in any step of the preparation of the catalyst, and the molar ratio of said component to a is about 1-500.

In a specifc example of the above catalyst, said preparation process for neodymium based homogeneous phase rare-earth catalyst comprises, first mixing component a) with component d) in an inert solvent, then adding component c) into the above mixture, finally adding component b) into it, and then the obtained mixture of components a) to d) undergoing an aging reaction; or first mixing components a), c) and d), then adding component b) into the above mixture, and then the obtained mixture of a) to d) undergoing an aging reaction.

In the above catalyst, preferably, after component c) is contacted with the mixture of components a) and d) in an inert solvent, the reaction is carried out for 5 to 120min. The reaction can be carried out at -30 to 80°C, preferably 0-70°C. After that component b) is added to react for 0.5 to 48h, which can be carried out at -30 to 60°C, preferably -10 to 50°C.

The synthesis process of the above catalyst is simple and easy to be controlled. The catalyst prepared therein is a homogeneous phase catalyst with a simple composition and good stability, can maintain homogeneous phase, high activity and high directivity within a long time, and the preparation process thereof is simple and suitable for industrial-scale production. Using said homogeneous phase rare-earth catalyst can synthesize polymers with a cis-structure content of higher than 98%, an adjustable weight-average molecular weight within 1,000,000 to 2,500,000 and a molecular weight distribution of 3.0 to 4.0. And the polymerization process is stable and easy to be controlled, which is suitable for continuous process operation. The physical and mechanical properties of the synthesized polymers, such as processability, self-adhesion, abrasion resistance, flexibility and aging properties, are good; it can partially substitute natural rubber in the preparation of tyre products.

According to another aspect of the present invention, it provides a neodymium based homogeneous phase rare-earth catalyst prepared by a process comprising the following steps:
1) in an inert solvent, preparing a mixture solution comprising a neodymium carboxylate compound as component a, a halogen-containing compound as component c, a carboxylic acid as component e and a conjugated diene as component d;
2) adding an organo-aluminum compound as component b to the mixture obtained from step 1) to obtain said neodymium based homogeneous phase rare-earth catalyst,
wherein said organo-aluminum compound is selected from alkylaluminums with a general formula of AlR₃ and alkylaluminum hydrides with a general formula of AlHR₂, in which R is a C₁-C₆ linear or branched alkyl group; and the molar ratio the each components in the catalyst is 1:10-30:2-5:25-100:0.2-4 in view of a:b:c:d:e.

In a specific example of the above catalyst, the molar ratio of the components in the catalyst is 1:10-30:2-5:26-70:0.2-4 in view of a:b:c:d:e.

In the above catalyst, said neodymium carboxylate compound is a neodymium C₁-C₂₀ carboxylate,preferably a neodymium C₆-C₁₀ carboxylate and more preferably neodymium naphthenate, neodymium octanoate, neodymium isooctanoate, neodymium pelargonate, neodymium neodecanoate and neodymium decanoate.

In the above catalyst, said organo-aluminum is selected from trimethyl aluminum, trimethyl aluminum, tripropyl aluminum, tributyl aluminum, tripentyl aluminum, trihexyl aluminum, diethyl aluminum hydride, dipropyl aluminum hydride, dibutyl aluminum hydride, dipentyl aluminum hydride and dihexyl aluminum hydride, preferably selected from triethyl aluminum, tributyl aluminum, diethyl aluminum hydride and dibutyl aluminum hydride.

In the above catalyst, said halogen-containing compound is selected from alkylaluminum chlorides with a general formula of AlR₂X, and sesquialkyl aluminum halides with a general formula of Al₂R₃X₃, wherein R is a C₁-C₆ alkyl group and X is bromine or chlorine, preferably selected from diethyl aluminum chloride, sesquiethyl) aluminum chloride and diisobutyl aluminum chloride.

In the above catalyst, said conjugated diene compound is a C₄-C₆ conjugated diene, preferably selected from butadiene, isoprene, 1,3-pentadiene, 1,3-hexadiene and 2,3-dimethyl butadiene, more preferably selected from butadiene and isoprene, and most preferably isoprene.

In the above catalyst, said carboxylic acid is a C₅-C₁₀ carboxylic acid, preferably selected from naphthenic acid, octanoic acid, isooctanoic acid, pelargonic acid, neodecanoic acid and decanoic acid. The kind of said carboxylic acid e can be the same as or different from the kind of the ligand in said neodymium carboxylate compound.

In the above catalyst, there is no special limitation on the inert solvent used in the preparation process. The saturated aliphatic hydrocarbons or alicyclic hydrocarbon solvents that are commonly used in the field can be selected, wherein said saturated aliphatic hydrocarbons or alicyclic hydrocarbon solvent is inert on reaction components, and C₅-C₁₀ alkane or cycloalkane are often selected, such as pentane, isopentane, hexane, cyclohexane, heptane, octane or a mixture thereof.

In a specific example of the above catalyst, first component a), component d) and component e) are mixed in an inert solvent, then component c) is added into the above mixture and the obtained mixture is aged, after which component b) is added, and then the obtained mixture of components a) to e) is aged; or first component a), c), d) and e) are mixed, then component b) is added into the above mixture, and the obtained mixture of components a) to e) is aged.

In the above catalyst, preferably, components a), d) and e) are mixed, then component c) is added, and the mixture is aged at -30-60°C for 5-250min, after which component b) is added, the aging reaction is continued at -30-60°C for 0.5-48h, and the catalyst for conjugated diene polymerization is obtained.

The synthesis process of the above catalyst is simple and easy to be controlled. The prepared catalyst is a homogeneous phase catalyst with the advantages of a homogeneous phase, good stability, high activity and high directivity. Especially the catalyst comprising component e), as the addition of component e) can improve the stability and directional capability of the catalyst, the catalyst can maintain a homogeneous phase state, high activity and high directivity for more than one year. The catalyst of the present invention is especially suitable for isoprene polymerization, wherein the selectivity of cis-polymerization is higher than 98%, or even higher than 99%. The weight-average molecular weight of the prepared high cis-polyisoprene can be adjusted within 600,000 to 2,000,000, and the molecular weight distribution thereof is 2.0-5.0. The properties of the synthesized polymers, such as processability, self-adhesion, abrasion resistance, flexibility and aging properties, are good, which is suitable for preparing tyres with high performance or of other uses.

According to another aspect of the present invention, it provides a process for preparing conjugated diene polymers, said conjugated diene monomers are solution-polymerized in a solvent in the presence of the above catalyst to obtain a polymer solution.

In the above process, said conjugated diene monomers refer to any monomers with a conjugated double bond in the molecular thereof. The examples thereof include but are not limited to C₄-C₆ conjugated dienes, and the specific examples comprise butadiene, isoprene, 1,3-pentadiene, 1,3-hexadiene and 2,3-dimethyl butadiene, preferably butadiene or isoprene. In a specific example of the process of the present invention, said conjugated diene is isoprene. Said conjugated diene monomers can be the same as or different from the conjugated diene in the catalyst.

In the above process, during the solution polymerization or after the polymerization, an ionic surfactant is added to lower the viscosity of the polymer solution, and said ionic surfactant is preferably an anionic surfactant. The ionic surfactant is also added to terminate the polymerization.

In the above process, the anionic surfactant, can be but is not limited to carboxylic acid or a carboxylate, sulfonic acid or a sulfonate, a quaternary ammonium salt, an ether compound, or a surfactant synthesized from natural oil or macromoleculars.

In the above process, said anionic surfactant comprises a C₁₀-C₁₈ long-chain carboxylic acid or a carboxylate thereof, preferably comprising stearic acid, sodium stearate, potassium stearate, oleic acid, sodium oleate or potassium oleate.

In one specific example of the above process, said anionic surfactant comprises sulfonic acid or a sulfonate, and the molecular structure of said sulfonic acid and said sulfonate comprises a C₈-C₂₀ straight chain, branched chain, cyclic saturated or unsaturated carbon chain, preferably comprising sodium dodecylbenzene sulfonate, potassium dodecylbenzene sulfonate, sodium dodecyl sulfonate, or sodium methylene dinaphthalene sulfonate.

In another specific example of the above process, said anionic surfactant comprises a phosphate containing a C₈-C₂₀ straight chain, branched chain, cyclic saturated or unsaturated carbon chain, and preferably comprises octyl phosphate, decyl phosphate, trimethyl nonyl phosphate or cetyl phosphate.

In another specific example of the above process, said anionic surfactant comprises sulfuric acid and a sulfate containing a C₈-C₂₀ straight chain, branched chain, cyclic saturated or unsaturated carbon chain, and preferably comprises sodium dodecyl sulfate, sodium oleyl alcohol sulfate, sodium octadecanol sulfate or sodium polyoxyethylene aliphatic alcohol ether sulfate.

In another specific example of the above process, said anionic surfactant comprises ether compounds with a chemical structure of R-O-(CH₂CH₂O)ₙ-H, wherein R is a C₈-C₂₀ straight chain, branched chain, cyclic saturated or unsaturated carbon chain, the value of n is within the range of 3-10, and said ether compounds structured as R-O-(CH₂CH₂O)ₙ-H is preferably selected from polyoxyethylene aliphatic alcohol ether and polyoxyethylene secondary alcohol ether.

In another example of the the above process, said anionic surfactant comprises natural oils or synthesized polymeric surfactants. Said anionic surfactant is preferably selected from celluloses and lignins and more preferably from hydroxymethyl cellulose, sodium carboxymethyl cellulose and sodium lignin sulfate.

In the above process, when the anionic surfactant is used for conjugated diene solution polymerization, the adding amount of the anionic surfactant is 0.01-2wt%, preferably 0.02-1.5wt%, more preferably 0.05-1.0wt%, based on the polymer solution.

In a specific example of the above process, said anionic surfactant is added together with a polymerization reaction terminator. Said polymerization reaction terminator means using a common manner in the field to terminate the active polymers directly during the solution polymerization. The most selected terminates are water or alcohols, such as water, methanol, ethanol, n-propanol, iso-propanol, 2,6-di(tert-butyl) hydroquinone, methanol and so on. Preferably, an anionic surfactant and water are formulated into a water solution, and then added together, i.e., said ionic surfactant can be formulated into a water solution before being used for reducing the viscosity of the conjugated diene polymer solution. The concentration of the ionic surfactant water solution can be changed within a wider range on condition that the ionic surfactant can be dissolved in water. For example, said concentration can be up to 50%. Specifically speaking, viscosity reducing agents such as carboxylic acid, sulfonic acid, phosphoric acid and/or sulfuric acid can be first dissolved in water, into which alkali solution is added subsequently to form a corresponding salt for use. Alternatively, carboxylic acid, sulfonic acid, phosphoric acid and/or sulfuric acid can be contacted with an alkali solution and reacted to generate a corresponding salt, which is then used. The alkali used for preparing the solution of viscosity reducing agent comprises, but is not limited to, sodium hydroxide, and potassium hydroxide. The alkali solution can be prepared at any concentration, but preferably 10-50%, more preferably 15-40%. According to a specific embodiment of the present invention, the pH value of the water solution can be 7-9 after the acid reacts with the alkali.

In a specific example of the above process, said polymerization comprises a premixing step, in which the conjugated diene monomers, the neodymium based homogeneous phase rare-earth catalyst and the solvent are first added into the pre-mixer system to be pre-mixed, and then the solution polymerization of the mixed materials is carried out.

In the above premixing step, preferably, the monomers, the catalyst and the solvent are added into said loop mixer separately, at least said conjugated diene monomers and said neodymium based homogeneous phase rare-earth catalyst are individually added into the pre-mixer system to be premixed. The solvent can be added alone or added with any one of the monomers and the catalyst into said loop reactor. The object of such operation is to better avoid a pre-polymerization, which is beneficial for subsequent mixing operations and solution polymerization.

In the above premixing step, said conjugated diene monomers and said neodymium based homogeneous phase rare-earth catalyst are added into the pre-mixer system preferably after being individually cooled. After the cooling operation, a pre-polymerization in said loop mixer can be better avoided, and the reaction temperature in the subsequent solution polymerization can be better controlled. Generally, said polymerization materials are cooled by a cooler beforehand to a certain low temperature range. In a specific example, the object temperature of said cooling operation is -30 to 20°C, preferably -20 to 10°C, and more preferably -10 to 0°C.

In the above premixing step, the isoprene monomers and the catalyst are preferably cooled individually in different coolers beforehand to corresponding low temperature ranges, and the solvent can be cooled alone, or cooled with any one of the monomers and the catalyst. In a specific example, three coolers are used to cool the isoprene monomers, the catalyst and the solvent individually; preferably, two coolers are used to cool the isoprene monomers and the catalyst individually; more preferably, the solvent is cooled with the catalyst taking into account the feeding amount of the isoprene monomers and the solvent is much higher than that of the catalyst during solution polymerization. Said cooler can be a cooler that is commonly used in the field, such as a plate heat exchanger, wherein the cooling medium can be water at a low temperature or frozen brine, preferably frozen brine.

In the above premixing step, the feeding amount of the polymerization materials (monomers, catalyst and solvent) can be determined according to the subsequent solution polymerization. Specifically, the concentration of the monomers can be 10-20wt%, preferably 13-17wt%, based on the total weight of the whole polymerization materials.

In a specific example of the above premixing step, said pre-mixer system comprises an axial flow pump and a loop mixer linked with said axial flow pump, and said loop mixer comprises at least two straight pipes, elbows connecting said straight pipes to form a loop, a material outlet at the lower section of the loop mixer, and at least two material inlets.

In the above loop mixer, said two material inlets are used for introducing the isoprene monomers and the catalyst individually. The solvent can be added together with the isoprene monomers and/or the catalyst, preferably the solvent is added with the catalyst taking into account the feeding mounts of both isoprene monomers and the solvent are higher than that of the feeding amount of the catalyst during solution polymerization. Three material inlets can also be arranged to introduce the isoprene monomers, the catalyst and the solvent individually. The material outlet is preferably provided in the bottom of the loop mixer, and used to discharge the mixed materials. Said axial flow pump can be any axial flow pump that is commonly used in the field. The circular flow in the loop mixer can be selected by one skilled in the art according to the requirement of the process.

According to the present invention, the height-diameter ratio of the straight pipe section in said loop mixer is 2-100, preferably 3-50, more preferably 4-20.

According to the premixing system comprising a loop mixer in the present disclosure, said loop mixer is connected to said axial flow pump at the bottom thereof, and the ratio of the circular flow Qᵣ inside said loop mixer to the outlet flow Qₒᵤₜ from the loop mixer is controlled as 100 to 140, preferably 120-130.

According to the premixing system comprising a loop mixer in the present disclosure, polymerization materials flow circularly and rapidly in said loop mixer due to the large flow effect of the axial flow pump. Basically, there is not a dead mixing zone in the mixer, and all the reaction materials can be mixed fully under the turbulence to form a high uniform mixture.

In another specific example of the above pre-mixing step, said pre-mixer system comprises a pre-mixing tank, said pre-mixing tank comprising:
a rotatable central shaft arranged in the premixing tank along the longitudinal direction;
at least two radial-flow stirring blades mounted on the central shaft; and
an annual disk located between two adjacent radial-flow stirring blades, wherein the central shaft passes through the annual disk, and the annual disk is connected to the inner wall of the premixing tank at the outer peripheral portion thereof.

In the premixing tank according to the present disclosure, on the one hand, materials to be mixed will be shattered through a high shearing and dispersing action generated by the radial-flow stirring blades mounted on the central shaft. On the other hand, materials to be mixed will be promoted to integrally circulate in the premixing tank by means of annual disks located between the stirring blades, so that materials can be mixed with each other in a high microcosmically uniform state in a short time. Therefore, subsequent polymerization process is facilitated.

In an exemplary embodiment, the out diameter of the annual disk matches with the inner diameter of the premixing tank, and the annual disk is connected to the inner wall of the premixing tank at two or more circumferentially symmetric connecting positions on the outer peripheral portion thereof. The annual disk can be connected to the inner wall of the premixing tank in any suitable manner conventionally used in the art. For example, brackets can be provided on the inner wall of the premixing tank for supporting the annual disk. The number of connecting positions can be suitably selected as needed, such as 2-8, preferably 3-6 and more preferably 4.

In an exemplary embodiment, the annular disk is provided with a central hole, through which the central shaft passes. The diameter of the central hole can be 1-1.5 times greater than that of the stirring blade.

In a further exemplary embodiment, the annular disk is provided with a radially inward groove between two adjacent connecting positions. In this case, materials can not only flow through the passage formed by the central hole of the annular disk, but also flow through the passage formed by the groove and the inner wall of the premixing tank. Therefore, flowability of materials to be mixed in the premixing tank can be further enhanced, facilitating a sufficient mixing of materials.

In the case of two or more annular disks, preferably, corresponding grooves in two adjacent annular disks can be staggered with each other at a certain angle in the circumferential direction. More preferably, a groove in an annular disk is staggered with each of the corresponding grooves in other annular disks at a certain angle, so that the passage formed by the grooves and the inner wall of the premixing tank will be entirely non-linear along the longitudinal direction. Consequently, the mixing effect of materials can be further enhanced.

The quantity of grooves can be 2-8, preferably 3-6 and more preferably 4. The area of each groove can be equal to 1/4 to 1/2, preferably 1/3, of the sector area of the annular disk between the two corresponding connecting positions. In a preferred embodiment, the bottom of the groove is symmetric with respect to the radius axis passing through the middle point of line connecting the two corresponding connecting positions.

The premixing tank according to the present disclosure has a height-diameter ratio of 1-4, preferably 2-3. The quantity of the radial-flow stirring blades can be e.g. 1-3, preferably 1.5-2, times greater than the height-diameter ratio. The diameter of the stirring blades can be e.g. 1/4-2/3, preferably 1/3-1/2, of that of the premixing tank. The above parameters, such as the height-diameter ratio, should be selected so that the average resident time of materials in the premixing tank is 1.0-10 min, preferably 3-8 min and more preferably 4-6 min.

In the premixing tank according to the present disclosure, the distance between two adjacent stirring blades can be 0.5-2 times greater than the diameter of the stirring blades, for example. In a preferred embodiment, the distance is gradually increased from bottom to top along the longitudinal direction. The arrangement enables more stirring blades are placed in the lower region of the premixing tank but less in the upper region thereof. Therefore, the shearing and dispersing action of the stirring blades can be well performed, thus facilitating a sufficient mixing of materials.

Moreover, in another preferred embodiment, the annular disks can be arranged so that less annular disks are placed between two adjacent stirring blades in the lower region of the premixing tank than those in the upper region thereof. For example, in the lower region of the premixing tank only one stirring blade is placed between two adjacent stirring blades; however, in the upper region of the premixing tank two or more stirring blades are placed between two adjacent stirring blades. Therefore, a strong integral circulation is formed in the whole premixing tank, thus further facilitating a sufficient mixing of dispersed materials macroscopically.

According to the present disclosure, inlets are arranged in the bottom region of the premixing tank for introducing materials to be mixed, and an outlet is arranged in the upper region of the premixing tank for discharging mixed materials. Each material to be mixed is preferably introduced into the premixing tank separately. With respect to the premixing process for preparing rare-earth isoprene rubber, the isoprene monomers and the catalyst should be introduced into the premixing tank from different inlets, and the solvent can be introduced separately, or together with any one of the above-mentioned two materials. In this manner, prepolymerization can be avoided, thus facilitating the subsequent mixing operation and solution polymerization process.

Therefore, in a particular embodiment for preparing rare-earth isoprene rubber, the premixing tank according to the present disclosure can be provided with three inlets at the bottom region thereof, for introducing the isoprene monomers, the catalyst and the solvent respectively. Alternatively, only two inlets are provided for introducing the isoprene monomers and the catalyst respectively. In this case, considering the fact that the feeding amount of both the isoprene monomers and the solvent are far higher than that of the catalyst during the solution polymerization process, the solvent is preferably introduced together with the catalyst.

In the premixing tank according to the present disclosure, the high shearing and dispersing action generated by the radial-flow stirring blades is applied in combination with the promoting action generated by the annual disk on integral circulation of materials in the premixing tank, so that materials can be shattered, dispersed and integrally circulated in the premixing tank. Therefore, a high microcosmically uniform mixing degree can be reached in a short time. Consequently, a very good mixing effect can be obtained.

In the above pre-mixing system, the inlet flow and outflow flow of the polymerization materials are determined according to the production scale, and the size of said loop mixer such as the height-diameter ratio of the straight pipe section in said loop mixer can be determined correspondingly, so that the average resident time of materials in the loop mixer is controlled within 0.5-5min, preferably 2-4min; and the size of the raw material pre-mixing tank such as the height-diameter ratio of said pre-mixing tank can also be determined accordingly, such that the average resident time of materials in said pre-mixer is controlled within 1.0-10min, preferably 3-8min and more preferably 4-6min.

In the above process, the amount of the catalyst for the solution polymerization can be changed in a wider range. In a specific example, the dosage of the catalyst, based on the molar ratio of component a to the conjugated diene monomers, is 1 ×10⁻⁵-4×10⁻⁴, preferably 1.5×10⁻⁵⁻⁵-3.5×10⁻⁴. In another specific example, the dosage of the catalyst, based on the molar ratio of component a to the conjugated diene monomers, is 3.0×10⁻⁵-6.0×10⁻⁴. Excessive amount of catalyst not only increases costs but also increases the content of ash in the polymer product.

In the above process, there is no special limitation on the inert solvent used in said solution polymerization. Saturated aliphatic hydrocarbons or alicyclic hydrocarbon solvents that are commonly used in the field can be selected, wherein said saturated aliphatic hydrocarbons or alicyclic hydrocarbon solvents are inert, and a C₅-C₁₀ alkane or cycloalkane is often selected. Typical solvent comprises but is not limited to, hexane, cyclohexane, heptane, pentane, isopentane, octane, methyl cyclohexane, benzene, toluene, xylene and isopropylbenzene, and so on. Said solvent can be the same as or different from the inert solvent used in the catalyst preparation.

In a specific example of the above process, the reaction conditions of said solution polymerization are as follows. The polymerization temperature is -30-80°C, preferably 0-70°C, and more preferably 1.0-60°C; the polymerization time is 20-300min, preferably 30-200min.

According to the process provided by the present disclosure, the addition of an ionic surfactant, especially an anionic surfactant, can significantly reduce the viscosity effect of the conjugated diene polymer solution. The viscosity reducing process according to the present disclosure is simple and easy to be achieved in the industrial production equipment, so that the problems of difficult transportation and large energy consumption of high viscosity polymer solution can be solved. At the same time, when water is selected as a medium in the preparation of the viscosity reducing agent based on an ionic surfactant in the present disclosure, the process thereof is harmless and environmental friendly, wherein the polymerization process can be terminated at the same time when the viscosity of the polymer solution is reduced. No separate step is needed to elute or treat the viscosity reducing agent in the polymer solution. The properties of the products obtained by treatment commonly used in the field from the polymer solution whose viscosity has been reduced is not influenced.

The viscosity of the polymer solution can be reduced by 10-60%, preferably 12-56%, and more preferably 15-50% according to the process of the present disclosure.

In the above process, through the premixing step in the pre-mixing system, a highly uniform mixture can be obtained, which can make the catalyst be highly dispersed in the mixture, so that the catalytic efficiency can be further improved. The average resident time of said polymerization materials in said pre-mixing tank is very short, only a few minutes, such that the polymerization degree of each component in polymerization materials flowing out from said premixing tank is very low, which is beneficial to the for solution polymerization in the subsequent polymerization process.

With the process provided by the present disclosure, the prepared conjugated diene polymers, i.e. rare-earth isoprene rubber has a relatively high content of cis-1,4-configuration, and the rare-earth isoprene rubber obtained has a content of cis-1,4-configuration up to 98wt%, even up to 99wt%. Therefore, rare-earth isoprene rubber obtained by the preparation process in the present disclosure has an improved quality over the prior art.

### Brief description of drawings

In the following the present disclosure will be described with reference to the attached drawings. It is understood that these drawings are provided for illustration merely, not restricting the present disclosure in any way. In the drawings:
Fig. 1 schematically shows the mixing tank according to the present disclosure, which is provided with a plurality of radial-flow stirring blades and an annular disk located between every two adjacent stirring blades;
Fig. 2 schematically shows the plan view of the annular disk of Fig. 1;
Fig.3 schematically shows the isoprene monomer solution polymerization process for preparing rare-earth isoprene rubber, in which the premixing tank according to the present disclosure is used as a premixer for premixing raw materials;
Fig. 4 schematically shows the loop mixer according to the present disclosure; and
Fig.5 schematically shows the isoprene monomer solution polymerization process by using polymerization materials obtained from the process in the present disclosure, in which the loop mixer and the axial flow pump according to the present disclosure are used as the premixing system for premixing raw materials.

### Embodiments

The following examples are used to describe the present invention in detail, but the scope of the present invention does not limit to such examples.

In the present invention, the microstructure of the synthesized conjugated diene polymers is tested by Tensor 27 Infrared spectrometer and 400MHz Nuclear Magnetic Resonance Spectrometer of Bruker in Germany, wherein the solvent is deuterated chloroform; the molecular weight and molecular weight distribution are measured by LC-10AT Gel Permeation Chromatography (GPC) of Shimadzu, wherein THF is used as a flow phase, the polystyrene with narrow molecular weight distribution is used as the standard sample, and the temperature is 25.

### Catalyst Examples

### Example 1

Started from neodymium oxide, the cyclohexane is used as a solvent, and a solution of neodymium naphthenate in hexane is obtained by direct extraction, wherein the concentration of neodymium [Nd³⁺] is 0.21mo/l The 2mol/l of solutions of triisobutyl aluminium and diethyl aluminium chloride in cyclohexane are respectively prepared. The water contents of the solvents are less than 20ppm, and the oxygen in the solvent is removed with nitrogen before being used. The aging reactor is dried, and the oxygen therein is removed.

435g of cyclohexane solution is added into a 2L catalyst aging reactor under nitrogen, then 35g of isoprene and 62ml of neodymium naphthenate solution are added into said aging reactor, and 16ml of diethyl aluminum chloride solution is added into the aging reactor at 20°C under stirring, after which isoprene, neodymium naphthenate and diethyl aluminum chloride are contacted and react with one another at 20°C for 15min, followed by the addition of 98ml of triisobutyl aluminum solution, which is then the aged at 20°C for 60min. The concentration of the catalyst obtained is 1.5×10⁻⁵mol/ml.

The above prepared catalyst is used for isoprene solution polymerization. 400g of isoprene, 154lg of cyclohexane and 82ml of the catalyst are added into a 5L polymerization reactor in turn under nitrogen, wherein the concentration of monomers is 20%. After the reaction is carried out at 40°C for 50min, the polymer solution is discharged from the reactor, and a solution of 2,6-ditertbutyl hydroquinone in methanol is added to terminate the reaction. Before discharging the polymer solution, a small amount of polymer solution is taken out and weighted in a weighting bottle, which is then placed in a vacuum oven and dried until the weight is unchanged. The monomer conversation rate is calculated by the monomer weight before and after the drying, and the calculated conversion rate is 83%. The cis-1,4-structure content in the polymers is 98.0%, the weight-average molecular weight is 1,301,324, and the molecular weight distribution index is 3.6.

### Example 2

The solutions of triisobutyl aluminium and diethyl aluminium chloride in hexane with the concentration of 0.5mol/l are prepared respectively. A solution of neodymium naphthenate in hexane is obtained by direct extraction, wherein the concentration of neodymium [Nd³⁺] is 0.21mol/l. The treatments to the solvent and the aging reactor are similar to those in Example 1.

102g of isoprene, 130ml of neodymium naphthenate solution and 5280g of hexane solution are added into a 20L catalyst aging reactor under nitrogen, and then 163ml of diethyl aluminum chloride solution is added at 0°C under stirring. After the reaction is carried out at 0°C for 20min, 655ml of triisobutyl aluminum solution is added, and is aged for 8h. The concentration of the catalyst prepared is 0.3×10⁻⁵mol/ml.

The above prepared catalyst is used for isoprene solution polymerization. 350of isoprene, 1800g of hexane and 306ml of the catalyst are added into a 5L polymerization reactor in turn under nitrogen, wherein the concentration of the monomers is 15%. After the reaction is carried out at 25°C for 60min, the polymer solution is discharged from the reactor, and a solution of 2,6-ditertbutyl hydroquinone in methanol is added to terminate the reaction. The monomer conversion rate is 90%. The cis-1,4-structure concentration in the polymers is 98.2%, the weight-average molecular weight is 1,607,402, and the molecular weight distribution index is 3.4.

### Example 3

The reagents to be used are prepared as shown in Example 2. The treatments for the solvent and the aging reactor are similar to those in Example 1.

15g of butadiene, 713g of hexane solution and 31ml of neodymium naphthenate solution are added into a 2L catalyst aging reactor under nitrogen, and then 45ml of diethyl aluminum chloride solution is added at 10°C under stirring. After the reaction is carried out for 20min, 130ml of triisobutyl aluminum solution is added, and the aging is continued for 2h. The concentration of the catalyst obtained is 0.5×10⁻⁵mol/ml.

The above prepared catalyst is used for isoprene solution polymerization. 350 of isoprene, 1800g of hexane and 180ml of the catalyst are added into a 5L polymerization reactor in turn under nitrogen, wherein the monomer concentration is 15.4%. After the reaction is carried out at 25°C for 1.5h, the polymer solution is discharged from the reactor, and a solution of 2,6-ditertbutyl hydroquinone in methanol is added to terminate the reaction. The monomer conversion rate is 87%. The cis-1,4-structure content in the polymers is 98.2%, the weight-average molecular weight is 1,821,602, and the molecular weight distribution index is 3.2.

### Example 4

A solution of neodymium naphthenate in hexane is obtained by direct extraction, wherein the concentration of neodymium [Nd³⁺] is 0.5mol/l. The solutions of triisobutyl aluminium and diethyl aluminium chloride in hexane with the concentration of 0.5mol/l are prepared respectively. The treatments to the solvent and the aging reactor are similar to those in Example 1.

136g of isoprene, 3029g of hexane and 80ml of neodymium neodecanoate solution are added into a 20L catalyst aging reactor under nitrogen, and then 200ml of diethyl aluminum chloride solution is added at 0°C under stirring. After the reaction is carried out for 20min, 1.6L of triisobutyl aluminum solution is added, and the aging is continued for 6h. The concentration of the catalyst prepared is 0.6×10⁻⁵mol/ml.

The above prepared catalyst is used for isoprene solution polymerization. 250of isoprene, 2150g of hexane and 80ml of the catalyst are added into a 5L polymerization reactor in turn under nitrogen, wherein the monomer concentration is 10%, and the polymerization temperature is 30°C. After the reaction is carried out for 1.5h, the polymer solution is discharged from the reactor, and a solution of 2,6-ditertbutyl hydroquinone in methanol is added to terminate the reaction. The monomer conversion rate is 85%. The cis-1,4-structure content in the polymers is 98.1%, the weight-average molecular weight is 1549621, and the molecular weight distribution index is 3.6.

### Example 5

The reagents to be used are prepared as shown in Example 4. The treatments to the solvent and the aging reactor are similar to those in Example 1.

103g of isoprene, 80ml of neodymium neodecanoate solution and 1802g of hexane solution are added into a 20L catalyst aging reactor under nitrogen, and then 240ml of diethyl aluminum chloride solution is added at 15°C under stirring. After the reaction is carried out for 10min, 800ml of triisobutyl aluminum solution is added, and the aging is continued for 4h. The concentration of the catalyst prepared is 1.0×1.0⁻⁵mol/ml.

The above prepared catalyst is used for isoprene solution polymerization. 350of isoprene, 1845g of hexane and 77ml of the catalyst are added into a 5L polymerization reactor in turn under nitrogen, wherein the monomer concentration is 15%. After the reaction is carried out at 25°C for 1.5h, the polymer solution is discharged from the reactor, and a solution of 2,6-ditertbutyl hydroquinone in methanol is added to terminate the reaction. The monomer conversion rate is 90%. The cis-1,4-structure content in the polymers is 98.6%, the weight-average molecular weight is 2.001,123, and the molecular weight distribution index is 3.2.

### Example 6

A solution of neodymium naphthenate in hexane is obtained by direct extraction, wherein the concentration of neodymium [Nd³⁺] is 0.5mol/l. The solutions of diisobutyl aluminium hydride and diethyl aluminium chloride in hexane with the concentration of 0.5mol/l are prepared respectively. The treatments to the solvent and the aging reactor are similar to those in Example 1.

109g of isoprene, 4435g of hexane solution and 80ml of neodymium neodecanoate solution are added into a 20L catalyst aging reactor under nitrogen, and then 240ml of diethyl aluminum chloride solution is added at 0°C under stirring. After the reaction is carried out for 30min, 800ml of diisobutyl aluminum hydride solution is added, and the aging is continued for 8h. The concentration of the catalyst prepared is 0.5×10⁻⁵mol/ml.

The above prepared catalyst is used for isoprene solution polymerization. 350g of isoprene, 1860g of hexane and 139ml of the catalyst are added into a 5L polymerization reactor in turn under nitrogen, wherein the monomer concentration is 15%. After the reaction is carried out at 30°C for 1.0h, the polymer solution is discharged from the reactor, and a solution of 2,6-ditertbutyl hydroquinone in methanol is added to terminate the reaction. The monomer conversion rate is 90%. The cis-1,4-structure content in the polymers is 98.2%, the weight average molecular weight is 1954798, and the molecular weight distribution index is 3.3.

### Example 7

The used reagents are prepared as shown in Example 4. The treatments to the solvent and the aging reactor are similar to those in Example 1.

136g of isoprene, 80ml of neodymium neodecanoate solution and 4409g of hexane are added into a 20L catalyst aging reactor under nitrogen, and then 240ml of diethyl aluminum chloride solution is added at 0°C under stirring. After the reaction is carried out for 15min, 800ml of triisobutyl aluminum solution is added, and the aging is continued for 18h. The concentration of the catalyst prepared is 0.5×10⁻⁵mol/ml.

350g of isoprene, 1860g of hexane and 134ml of the catalyst are added into a 5L polymerization reactor in turn under nitrogen, wherein the monomer concentration is 15%. After the reaction is carried out at 20°C for 1.5h, the polymer solution is discharged from the reactor, and a solution of 2,6-ditertbutyl hydroquinone in methanol is added to terminate the reaction. The monomer conversion rate is 92%. The cis-1,4-structure content in the polymers is 98.7%, the weight average molecular weight is 2,113,456, and the molecular weight distribution index is 3.2.

### Example 8

Both the concentration of the solution of neodymium neodecanoate in hexane and that of the solution of diethyl aluminum chloride in hexane are 0.5mol/l, and the concentration of the solution of triisobutyl aluminum in hexane is 2mol/l. The treatments to the solvent and the aging reactor are similar to those in Example 1.

50ml of neodymium neodecanoate solution, 13.6g of isoprene, 437ml of triisobutyl aluminium solution and 284g of hexane are added into a 2L catalyst aging reactor under nitrogen, and then the reaction is carried out for 20min at 0°C. After that, 150ml of diethyl aluminum chloride solution is added, and the aging is carried out for 18min at 0°C. The concentration of the catalyst prepared is 2.3×10⁻⁵mol/ml.

300of isoprene, 1690g of hexane and 38ml of the catalyst are added into a 5L polymerization reactor in turn under nitrogen, wherein the monomer concentration is 15%. After the reaction is carried out at 20°C for 3.5h, the polymer solution is discharged from the reactor, and a solution of 2,6-ditertbutyl hydroquinone in methanol is added to terminate the reaction. The monomer conversion rate is 65%. The cis-1,4-structure content in the polymers is 96.3%, the weight average molecular weight is 956,534, and the molecular weight distribution index is 2.7.

### Example 9

The reagents to be used are prepared as shown in Example 4. The treatments to the solvent and the aging reactor are similar to those in Example 1.

400ml of isoprene, 80ml of neodymium neodecanoate solution and 6.48L of hexane solution are added into a 20L catalyst aging reactor under nitrogen, and then 240ml of diethyl aluminum chloride solution is added at 0°C under stirring. After the reaction is carried out for 15min, 800ml of triisobutyl aluminum solution is added, and the aging is continued for 18h. The concentration of the catalyst prepared is 0.5×10⁻⁵mol/ml.

350g of isoprene, 1860g of hexane and 206ml of the catalyst are added into a 5L polymerization reactor in turn under nitrogen, wherein the monomer concentration is 15%. After the reaction is carried out at 20°C for 1.5h, the polymer solution is discharged from the reactor, and a solution of 2,6-ditertbutyl hydroquinone in methanol is added to terminate the reaction. The monomer conversion rate is 76%. The cis-1,4-structure content in the polymers is 98.0%, the weight average molecular weight is 1,870,156, and the molecular weight distribution index is 3.7.

### Example 10

The reagents to be used are prepared as shown in Example 4. The treatments to the solvent and the aging reactor are similar to those in Example 1.

The preparation of the catalyst is similar to that in Example 7. The catalyst is saved at 0°C for 6 months.

350g of isoprene, 1860g of hexane and 134ml of the catalyst are added into a 5l polymerization reactor in turn under nitrogen, wherein the monomer concentration is 15%. After the reaction is carried out at 20°C for 1.5h, the polymer solution is discharged from the reactor, and a solution of 2,6-ditertbutyl hydroquinone in methanol is added to terminate the reaction. The monomer conversion rate is 89%. The cis-1,4-structure content in the polymers is 98.5%, the weight average molecular weight is 2,257,901, and the molecular weight distribution index is 3.2.

### Example 11

The reagents to be used are prepared as shown in Example 4. The treatments for the solvent and the aging reactor are similar to those in Example 1.

The preparation of the catalyst is similar to that in Example 7. The catalyst is saved at 0°C for 1 year.

350h of isoprene, 1860g of hexane and 134ml of the catalyst are added into a 5L polymerization reactor in turn under nitrogen, wherein the monomer concentration is 15%. After the reaction is carried out at 20°C for 1.5h, the polymer solution is discharged from the reactor, and a solution of 2,6-ditertbutyl hydroquinone in methanol is added to terminate the reaction. The monomer conversion rate is 88%. The cis-1,4-structure content in the polymers is 98.3%, the weight average molecular weight is 2,367,867, and the molecular weight distribution index is 3.2.

### Example 12

8.0Kg of hexane, 87ml of the solution of neodymium neodecanoate in hexane with a concentration of 0.51mol/L, 2ml of neodecanoic acid, 237ml of isoprene and 66ml of the solution of diethyl aluminum chloride in hexane with a concentration of 2.0mol/L are added into a dried aging tank under nitrogen, and 389ml of the solution of triisobutyl aluminum in hexane with a concentration of 1.14mol/L is added after the reaction is carried out at 9°C under stirring for 14min, Then the aging reaction is continued for 41h, and finally the homogeneous phase catalyst is prepared.

1800g of hexane, 360 of isoprene and 214ml of the above catalyst are added into a polymerization reactor in turn at 40°C under nitrogen. After the reaction is carried out under stirring for 2h, the polymer solution is discharged from the reactor, and a solution of 2,6-ditertbutyl hydroquinone in methanol is added to terminate the reaction. After the solvent is volatilized, 355g of dried polyisoprene is obtained, and the monomer conversion rate is 98.6%. The cis-1,4-structure content in the polymers is 98.3%, the weight average molecular weight is 1.09×10⁶, and the molecular weight distribution index is 4.13.

### Example 13

4.5Kg of hexane, 80ml of the solution of neodymium neodecanoate in hexane with a concentration of 0.51mol/L, 6ml of neodecanoic acid, 200ml of isoprene and 250ml of the solution of diethyl aluminum chloride in hexane with a concentration of 0.5mol/L are added into a dried aging tank under nitrogen, and 1600ml of the solution of triisobutyl aluminum in hexane with a concentration of 0.5mol/L is added after the reaction is carried out at 8°C under stirring for 240min. The aging reaction is continued for 28h, and finally the homogeneous phase catalyst is prepared.

1800g of hexane, 360g of isoprene and 241ml of the catalyst are added into a polymerization reactor in turn at 16°C under nitrogen. After the reaction is carried out under stirring for 0.5h, the polymer solution is discharged from the reactor, and a solution of 2,6-ditertbutyl hydroquinone in methanol is added to terminate the reaction. After the solvent is volatilized, 317g of dried polyisoprene is obtained. The monomer conversion rate is 88.1%. The cis-1,4-structure content in the polymers is 98.2%.

### Example 14

The catalyst in Example 2 is located in a sealed glass bottle under nitrogen, and is saved at room temperature for 15 months, when the catalyst is still in a homogeneous phase.

1500g of hexane, 340 of isoprene and 230ml of the catalyst are added into a polymerization reactor in turn at 30°C under nitrogen. After the reaction is carried out under stirring for 40min, the polymer solution is discharged from the reactor, and a solution of 2,6-ditertbutyl hydroquinone in methanol is added to terminate the reaction. After the solvent is volatilized, 280g of dried polyisoprene is obtained, wherein the monomer conversion rate is 82.4% and the cis-1,4-structure content in the polymers is 98.7%.

### Example 15

4.5Kg of hexane, 80ml of the solution of neodymium neodecanoate in hexane with a concentration of 0.51mol/L, 7ml of neodecanoic acid, 140ml of isoprene and 160ml of the solution of diethyl aluminum chloride in hexane with a concentration of 0.5mol/L are added into a dried aging tank under nitrogen, and 740ml of the solution of triisobutyl aluminum in hexane with a concentration of 1.14mol/L is added after the reaction is carried out at 8°C under stirring for 15min. The aging reaction is continued for 30h, and finally the homogeneous phase catalyst is prepared.

1800g of hexane, 300g of isoprene and 150ml of the catalyst are added into a polymerization reactor in turn at 25°C under nitrogen. After the reaction is carried out under stirring for 3h, the polymer solution is discharged from the reactor, and a solution of 2,6-ditertbutyl hydroquinone in methanol is added to terminate the reaction. After the solvent is volatilized, 260g of dried polyisoprene is obtained, wherein the monomer conversion rate is 86.7%. The cis-1,4-structure content in the polymers is 98.6%, the weight average molecular weight is 8.47×10⁵, and the molecular weight distribution index is 3.24.

### Example 16

5.0Kg of hexane, 80ml of the solution of neodymium neodecanoate in hexane with a concentration of 0.51mol/L, 2ml of neodecanoic acid, 22ml of naphthenic acid, 180ml of isoprene and 60ml of the solution of diethyl aluminum chloride in hexane with a concentration of 2.0mol/L are added into a dried aging tank under nitrogen, and 400ml of the solution of triisobutyl aluminum in hexane with a concentration of 1.14mol/L is added after the reaction is carried out at 15°C under stirring for 30min. The aging reaction is continued at 25°C for 48h, and finally the homogeneous phase catalyst is prepared.

1800g of hexane, 350 of isoprene and 155ml of the above catalyst are added into a polymerization reactor in turn at 25°C under nitrogen. After the reaction is carried out under stirring for 3h, the polymer solution is discharged from reactor, and a solution of 2,6-ditertbutyl hydroquinone in methanol is added to terminate the reaction. After the solvent is volatilized, 248g of dried polyisoprene is obtained, wherein the monomer conversion rate is 70.9%. The cis-1,4-structure content in the polymer is 98.6%, the weight average molecular weight is 1.74×10⁶, and the molecular weight distribution index is 2.53.

### Example 17

6.0Kg of hexane, 80ml of the solution of neodymium neodecanoate in hexane with a concentration of 0.51mol/L, 2ml of isooctanoic acid and 180ml of isoprene are added into a dried aging tank under nitrogen. After the mixture is stirred and mixed, 52ml of the solution of diethyl aluminum chloride in hexane with a concentration of 2.0mol/L is added at 15°C. 380ml of the solution of triisobutyl aluminum in hexane with a concentration of 1.14mol/L is added after the reaction is carried out for 25min, and the aging reaction is continued for 17h. Finally the homogeneous phase catalyst is prepared.

1800g of hexane, 280 of isoprene and 160ml of the above catalyst are added into a polymerization reactor in turn at 30°C under nitrogen. After the reaction is carried out under stirring for 3h, the polymer solution is discharged from the reactor, and a solution of 2,6-ditertbutyl hydroquinone in methanol is added to terminate the reaction. After the solvent is volatilized, 242g dried polyisoprene is obtained, wherein the monomer conversion rate is 86.4%. The cis-1,4-structure content in the polymers is 98.2%, the weight average molecular weight is 9.24×10⁵, and the molecular weight distribution index is 3.26.

### Example 18

4.0Kg of hexane, 60ml of the the solution of neodymium neodecanoate in hexane with a concentration of 0.51mol/L, 2ml of neodecanoic acid and 80ml of isoprene are added into a dried aging tank under nitrogen. After the mixture is stirred and mixed, 65ml of the solution of diethyl aluminum chloride in hexane with a concentration of 2.0mol/L is added at 15°C. 780ml of the solution of triisobutyl aluminum in hexane with a concentration of 1.14mol/L is added after the reaction is carried out for 25min, and the aging reaction is continued for 1.2h. Finally the homogeneous phase catalyst is prepared.

1.800g of hexane, 260g of isoprene and 120ml of the above catalyst are added into a polymerization reactor in turn at 25°C under nitrogen. After the reaction is carried out under stirring for 1.5h, the polymer solution is discharged from the reactor, and a solution of 2,6-ditertbutyl hydroquinone in methanol is added to terminate the reaction. After the solvent is volatilized, 218g of dried polyisoprene is obtained, wherein the monomer conversion rate is 83.8%. The cis-1,4-structure content in the polymers is 98.1%, the weight average molecular weight is 6.24×10⁵, and the molecular weight distribution index is 4.06.

### Example 19

5.0Kg of hexane, 60ml of the solution of neodymium neodecanoate in hexane with a content of 0.51mol/L, 4ml of neodecanoic acid and 300ml of isoprene are added into a dried aging tank under nitrogen. After the mixture is stirred and mixed, 46ml of the solution of diethyl aluminum chloride in hexane with a concentration of 2.0mol/L is added at 15°C. 540ml of the solution of triisobutyl aluminum in hexane with a concentration of 1.14mol/L is added after the reaction is carried out for 130min, and then the aging reaction is continued for 10h. Finally the homogeneous phase catalyst is prepared.

1700g of hexane, 250 of isoprene and 210ml of the above catalyst are added into a polymerization reactor in turn at 25°C under nitrogen. After the reaction is carried out under stirring for 2.0h, the polymer solution is discharged from the reactor, and a solution of 2,6-ditertbutyl hydroquinone in methanol is added to terminate the reaction. After the solvent is volatilized, 175g of dried Polyisoprene is obtained, wherein the monomer conversion rate is 70.0%. The cis-1,4-structure content in the polymers is 98.0%.

### Comparative Example 1

The reagents to be used are prepared as shown in Example 4. The treatments to the solvent and the aging reactor are similar to those in Example 1.

80ml of isoprene, 80ml of neodymium neodecanoate solution and 6.80L of hexane are added into a 20L catalyst aging reactor under nitrogen, and 240ml of diethyl aluminum chloride solution is added at 0°C under stirring. After the reaction is carried out for 15min, 800ml of triisobutyl aluminum solution is added, and the aging is continued for 18h. The concentration of the catalyst prepared 0.5×10⁻⁵mol/ml. The catalyst is saved at 0°C for 6 months.

350of isoprene, 1860g of hexane and 134ml of the catalyst are added into a 5L polymerization reactor in turn under nitrogen, wherein the monomer concentration is 1.5%. After the reaction is carried out at 20°C for 1.5h, the polymer solution is discharged from the reactor, and a solution of 2,6-ditertbutyl hydroquinone in methanol is added to terminate the reaction. The monomer conversion rate is 89%. The cis-1,4-structure content in the polymers is 96.9%, the weight average molecular weight is 1,876,369, and the molecular weight distribution index is 3.8.

### Comparative Example 2

For the method for preparing a rare-earth catalyst for polyisoprene and the method for preparing polyisoprene,CN101045768A can be referred to. Into a dried catalyst reactor under nitrogen, 24ml of the solution of Nd(vers)₃ in hexane with a content of 0.1M, 48ml of the solution of butadiene in hexane with a content of 1.0M and 36ml of the solution of Al(i-Bu)₃ in hexane with a content of 2.0M are added. The reaction is carried out at 80°C for 1min, and a dark yellowish green solution is obtained; then 12ml of the solution of Al(i-Bu)₂Cl in hexane with a content of 0.2M is added, and the homogeneous phase rare-earth catalyst for isoprene polymerization is obtained after the reaction is carried out at 40°C for 120min.

2560ml of the solvent of heptane and 440ml of isoprene monomers (300g) are added into a 5L dried autoclave without oxygen under nitrogen, when the concentration of the monomers is 10g/100ml. Then the above prepared catalyst is added, and the ratio of the moles of Nd in the catalyst to the grams of the added monomers is 8.0×10⁻⁶mol/g. After the reaction is carried out at 40°C for 5h, a solution of 2,6-ditertbutyl hydroquinone in ethanol with a concentration of 1.0% is used to terminate the polymerization, after which the polymers are precipitated in excessive ethanol. The polymers are then washed by ethanol, pressured, and vacuum dried at 40°C for 24h. 249g of an isoprene polymerization product is obtained.

The yield of the polymers is 98%. The cis-1,4-structure content is 96.3% measured by Infrared spectroscopy. Measured by Gel Permeation Chromatography, the weight-average molecular weight is 1270000, the number-average molecular weight is 512000, the molecular weight distribution index is 2.48, the mooney viscosity is 59.

### Viscosity Reducing Agent Examples

The viscosity of a polymer solution is measured by HAAKE C35 of Mitsubishi in Japanese, and the testing temperature is 50°C.

The treatment process of the polymer solution is the same as that of the polymer solution into which a viscosity reducing agent is added. The solvent and unreacted monomers in the polymer solution are removed through stripping by steam and hot water, and a solid sample of polymer comprising water, a small amount of solvent and monomers is obtained, which is then dried by an open mill to obtain the products. The mooney viscosity of the polymers is tested by SMV-300 automatic mooney viscometer of Shimadzu according to GB/T1232.1-2000. The raw rubber is mixed by an open mill at a roll temperature of 70±5-C, and the vulcanization recipe and curing conditions are carried out according to the national standard. The tensile strength is tested by AG-20kNG electronic tensile machine of Shimadzu.

### Example 1 (0.1% viscosity reducing agent is added)

Polyisoprene is synthesized by using a rare-earth catalyst system of neodymium neodecanoate/triisobutyl aluminum/diethyl aluminum chloride/isoprene/neodecanoic acid and naphthenic acid (the molar ratio therein is 1/11/3/44/3), isoprene as monomers and cyclohexane as a solvent. The polymerization is carried out under nitrogen. 350g of isoprene, 1800g of hexane and 106g of the catalyst are added into a 5L polymerization reactor in turn, wherein the concentration of monomers is 15.5wt%, the catalyst amount is 2.2×10⁻⁶mol Nd/g IP, the polymerization temperature is 25°C, and the polymerization time is 3h. The weight percentage of polymers in the polyisoprene solution is 11.54%. The weight average molecular weight of the polyisoprene is 1,744,102, and the molecular weight distribution index is 2.53. The viscosity of the polymer solution is 10700cp. The ash content of the product is 0.46%, and the tensile strength of vulcanized rubber is 26.0MPa.

200g of oleic acid is added into a 5L reactor, and 1742g of water is added, after which 213g of sodium hydroxide solution with a concentration of 15wt% is added into the reactor under stirring. And a water solution of sodium oleate with a concentration of 15wt% is obtained after full reaction..

20g of the prepared sodium oleate solution is added into 1000g of the above polyisoprene solution at 25°C, and the polymerization is terminated after the mixture is uniformly mixed. The viscosity of the polymer solution is reduced to 7200cp. The weight average molecular weight is 1,631,243, and the molecular weight distribution index is 2.54. The ash content of the product is 0.46%, and the tensile strength of vulcanized rubber is 26.0MPa.

### Example 2

Polybutadiene is synthesized by using a rare-earth catalyst system of neodymium neodecanoate/diisobutyl aluminum hydride/diethyl aluminum chloride (the molar ratio therein is 1/18/3), butadiene as monomers and the hexane solution as a solvent. The polymerization is carried out under nitrogen. 800g of butadiene, 3858g of hexane and 48g of the catalyst are added into a 10L polymerization reactor in turn, wherein the concentrationt of monomers is 17wt%, the catalyst amount is 2.2×10⁻⁶mol Nd/gIP, the polymerization temperature is 50°C, and the polymerization tune is 1.5h. The weight percentage of polymers in the polybutadiene solution is 16.4%. The weight average molecular weight of polybutadiene is 654,102, and the molecular weight distribution index is 2.7. The viscosity of the polymer solution is 14000cp. The ash content of the product is 0.48%, and the tensile strength of vulcanized rubber is 17.0MPa.

200g of oleic acid is added into a 3L reactor, and 736g of water is added, after which 142g of sodium hydroxide solution with a concentration of 20wt% is added into the reactor under stirring.

And a water solution of sodium oleate with a concentration of 20wt% is obtained after full reaction.

25g of the prepared sodium oleate solution is added into 1000g of the above polybutadiene solution at 50°C, and the polymerization is terminated after the mixture is uniformly mixed. The viscosity of the polymer solution is reduced to 9600cp. The weight average molecular weight of polybutadiene is 611,332, and the molecular weight distribution index is 2.8. The ash content of the product is 0.48%, and the tensile strength of vulcanized rubber is 16.9MPa.

### Example 3

Butadiene-isoprene copolymers are synthesized by using a rare-earth catalyst system of neodymium neodecanoate/triisobutyl aluminum/diethyl aluminum chloride (the molar ratio therein is 1/20/3.5), isoprene and butadiene as monomers and hexane as the solvent. The polymerization is carried out under nitrogen. 98g of isoprene, 1768g of hexane, 302g of butadiene and 54g of the catalyst are added into a 5L polymerization reactor in turn, wherein the concentration of monomers is 18wt%, the catalyst amount is 2.0×10⁻⁶mol Nd/gIP, the polymerization temperature is 40°C, and the polymerization time is 2.0h. The molar ratio of butadiene to isoprene in the composition of copolymers is 4, and the weight percentage of polymers in the polymer solution is 15.5%. The weight average molecular weight of the copolymers is 866,700, and the molecular weight distribution index is 3.2. The viscosity of the polymer solution is 75500mpa·s. The ash content of the product is 0.5%, and the tensile strength of vulcanized rubber is 12.6MPa.

150g of oleic acid is added into a 2L reactor, and 713g of water is added, after which 215 of sodium hydroxide solution with a concentration of 10wt% is added into the reactor under stirring. And a water solution of sodium oleate with a concentration of 15wt% is obtained after full reaction.

53g of the prepared sodium oleate solution is added into 1000g of the above copolymer solution at 40°C, and the polymerization is terminated after the mixture is uniformly mixed. The viscosity of the polymer solution is reduced to 36000cp. The weight average molecular weight of the copolymers is 826,605, and the molecular weight distribution index is 3.3. The ash content of the product is 0.5%, and the tensile strength of vulcanized rubber is 12.6MPa.

### Example 4 (0.5% viscosity reducing agent is added)

Polyisoprene is synthesized by using a rare-earth catalyst system of neodymium neodecanoate/triisobutyl aluminum/tert-butyl chloride/ isoprene (the molar ratio therein is 1/12/10/39), isoprene as monomers and hexane as the solvent. The polymerization is carried out under nitrogen. 400g of isoprene, 2044g of hexane and 56g of the catalyst are added into a 5L polymerization reactor in turn, wherein the concentration of monomers is 16wt%, the catalyst amount is 2.0×10⁻⁶mol Nd/gIP, the polymerization temperature is 40°C, and the polymerization time is 1.5h. The weight percentage of polymers in the polyisoprene solution is 13.9%. The weight average molecular weight is 1,760,711, and the molecular weight distribution index is 3.3. The viscosity of the polymer solution is 11200cp. The ash content of the product is 0.48%, and the tensile strength of vulcanized rubber is 25.8MPa.

5g of oleic acid is added into 1000g of the above polyisoprene solution at 40°C, and the polymerization is terminated after the mixture is uniformly mixed. The viscosity of the polymer solution is reduced to 6800cp. The weight average molecular weight of the copolymers is 1,731,535, and the molecular weight distribution index is 3.3. The ash content of the product is 0.5%, and the tensile strength of vulcanized rubber is 25.6MPa.

### Example 5 (0.2% viscosity reducing agent is added)

Polybutadiene is synthesized by using a rare-earth catalyst system of neodymium octanoate /diisobutyl aluminum hydride/ sesquiethyl aluminum chloride (the molar ratio therein is 1/20/2), butadiene as monomers and hexane as the solvent. The polymerization is carried out under nitrogen. 500g of butadiene, 1960g of hexane and 40g of the catalyst are added into a 5L polymerization reactor in turn, wherein the concentration of monomers is 20wt%, the catalyst amount is 2.4×10⁻⁶mol Nd/gIP, the polymerization temperature is 50°C, and the polymerization time is 1.0h. The weight percentage of polymers in the polybutadiene solution is 16.8%. The weight average molecular weight of polybutadiene is 591,212, and the molecular weight distribution index is 3.2. The viscosity of the polymer solution is 14300cp. The ash content of the product is 0.45%, and the tensile strength of vulcanized rubber is 16.6MPa.

210g of potassium dodecylbenzene sulfonate is added into a 2L reactor, after which 390g of water is added. A water solution with a concentration of 35wt% is obtained after the potassium dodecylbenzene sulfonate is fully dissolved.

5.7g of the prepared potassium dodecylbenzene sulfonate solution is added into 1000g of the above polybutadiene solution at 50°C, and the polymerization is terminated after the mixture is mixed uniformly. The viscosity of the polymer solution is reduced to 10900cp. The weight average molecular weight of polybutadiene is 586,216, and the molecular weight distribution index is 3.3. The ash content of the product is 0.45%, and the tensile strength of vulcanized rubber is 16.2MPa.

### Example 6 (0.5% viscosity reducing agent is added)

Polyisoprene is synthesized by using a rare-earth catalyst system of neodymium neodecanoate/triisobutyl aluminum/diethyl aluminum chloride (the molar ratio thereof is 1/10/3), isoprene as monomers and hexane as the solvent. The polymerization is carried out under nitrogen. 350g of isoprene, 1940g of hexane, and 44g of the catalyst are added into a 5L polymerization reactor in turn, wherein the concentration of monomers is 15wt%, the catalyst amount is 1.86×10⁻⁶mol Nd/gIP, the polymerization temperature is 15°C, and the polymerization time is 1.5h. The weight percentage of polymers in the polyisoprene solution is 12.4%. The weight average molecular weight of polyisoprene is 2,011,579, and the molecular weight distribution index is 3.0. The viscosity of the polymer solution is 12600cp. The ash content of the product is 0.44%, and the tensile strength of vulcanized rubber is 27.0MPa.

200g of sodium lignin sulfate is added into a 2L reactor, after which 800g of water is added. And a water solution with a concentration of 20wt% is obtained after the sodium lignin sulfate is fully dissolved.

25g of the prepared sodium lignin sulfate solution is added into 1000g of the above polyisoprene solution at 30°C, and the polymerization is terminated after the mixture is mixed uniformly. The viscosity of the polymer solution is reduced to 8800cp. The weight average molecular weight of polyisoprene is 1,960,460, and the molecular weight distribution index is 3.0. The ash content of the product is 0.44%, and the tensile strength of vulcanized rubber is 26.8Mpa.

### Example 7 (0.5% viscosity reducing agent is added)

Polyisoprene is synthesized by using a rare-earth catalyst system of neodymium neodecanoate/triisobutyl aluminum/diethyl aluminum chloride/butadiene (the molar ratio therein is 1/10/3.5/42), isoprene as monomers and hexane as the solvent. The polymerization is carried out under nitrogen. 350g of isoprene, 1800g of hexane, and 122g of the catalyst are added into a 5L polymerization reactor in turn, wherein the concentration of monomers is 15wt%, the catalyst amount is 2.5×10⁻⁶mol Nd/gIP, the polymerization temperature is 25°C, and the polymerization time is 1.5h. The weight percentage of polymers in the polyisoprene solution is 13.4%. The weight average molecular weight is 1,821,602, and the molecular weight distribution index is 3.2. The viscosity of the polymer solution is 14700cp. The ash content of the product is 0.21%, and the tensile strength of vulcanized rubber is 27.0MPa.

100g of sodium decyl phosphate is added into a 2L reactor, after which 1000g of water is added. And a water solution with a concentrationt of 10wt% is obtained after the sodium decyl phosphate is fully dissolved.

50g of the prepared sodium decyl phosphate solution is added into 1000g of the above polyisoprene solution at 25°C, and the polymerization is terminated after the mixture is mixed uniformly. The viscosity of the polymer solution is reduced to 9300cp. The weight average molecular weight of Polyisoprene is 1,960,460, and the molecular weight distribution index is 3.0. The ash content of the product is 0.21%, and the tensile strength of vulcanized rubber is 26.8MPa.

### Example 8 (0.6% viscosity reducing agent is added)

Polyisoprene is synthesized by using a rare-earth catalyst system of neodymium neodecanoate/triisobutyl aluminum/diethyl aluminum chloride/isoprene (the molar ratio therein is 1/10/3/40), isoprene as monomers and hexane as the solvent. The polymerization is carried out under nitrogen. 350g of isoprene, 1860g of hexane, and 95g of the catalyst are added into a 5L polymerization reactor in turn, wherein the concentration of monomers is 15wt%, the catalyst amount is 2.0×10⁻⁶mol Nd/gIP, the polymerization temperature is 30°C, and the polymerization time is 1.0h. The weight percentage of polymers in the polyisoprene solution is 13.5%. The weight average molecular weight of polyisoprene is 1,954,798, and the molecular weight distribution index is 3.3. The viscosity of the polymer solution is 16100cp. The ash content of the product is 0.26%, and the tensile strength of vulcanized rubber is 27.0Mpa.

1.00g of polyoxyethylene lauryl ether is added into a 2L reactor, after which 1000g of water is added. And a water solution with a concentrationt of 10wt% is obtained after the polyoxyethylene lauryl ether is fully dissolved.

60g of the prepared polyoxyethylene lauryl ether solution is added into 1000g of the above polyisoprene solution at 25°C, and the polymerization is terminated after the mixture is mixed uniformly. The viscosity of the polymer solution is reduced to 10300cp. The weight average molecular weight of polyisoprene is 1,960,460, and the molecular weight distribution index is 3.3. The ash content of the product is 0.26%, and the tensile strength of vulcanized rubber is 26.8MPa.

### Premixing System

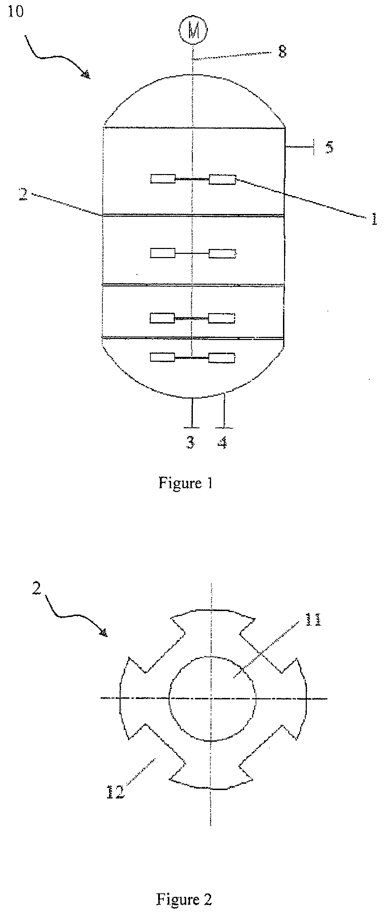

As shown in Fig. 1, the premixing tank 10 according to the present disclosure includes a central shaft 8, which is arranged in the premixing tank 1.0 along the longitudinal direction and can be driven into rotation by a motor M. At least two radial-flow stirring blades 1 are mounted on the central shaft 8. The quantity of stirring blades 1 can be suitably selected as needed, for example 2-10, and in the example shown in Fig. 1 there are four stirring blades. The radial-flow stirring blade 1 can be any conventional radial-flow stirring blades used in the field, the rotation speed of which can be 200-800 rpm, preferably 300-700 rpm, and more preferably 350-600 rpm.

In the mixing process, materials to be mixed, such as the reaction monomers and the catalyst are introduced in the premixing tank 10 through two material inlets 3, 4 arranged in the bottom of the premixing tank 10 respectively, and then mixed with each other under the action of the stirring blades 1 driven by the central shaft 8. After that, materials will be discharged from a material outlet 5 arranged in the upper portion of the premixing tank 10 for further treatment. These structures and/or processes are well known to one skilled in the art, thus the details of which are omitted here for the sake of conciseness.

According to the present disclosure, the premixing tank 10 is further provided therein with an annular disk 2, which passes through the central shaft 8 and is located between two adjacent radial-flow stirring blades 1. The annular disk 2 is preferably located at the middle point between two adjacent radial-flow stirring blades 1 along the longitudinal direction. As shown in Fig. 2, the annular disk 2 comprises a central hole 11 having an inner diameter larger than the diameter of the central shaft 8, so that the central shaft 8 can pass through the central hole 11 of the annular disk 2. The annular disk 2 is connected to the inner wall of the premixing tank 10 at its outer peripheral portion. Therefore, in the premixing tank 10 according to the present disclosure, on the one hand, materials to be mixed will be shattered through a high shearing and dispersing action generated by the radial-flow stirring blades 1 mounted on the central shaft 8. On the other hand, materials to be mixed will be promoted to integrally circulate in the premixing tank by means of annual disks 2 located between the stirring blades 1, so that materials can be mixed with each other in a high microcosmically uniform state in a short time. Therefore, subsequent polymerization process is facilitated.

In a typical embodiment, the outer diameter of the annual disk 2 matches with the inner diameter of the premixing tank 10, and the annual disk is connected to the inner wall of the premixing tank at two or more circumferentially symmetric connecting positions on the outer peripheral portion thereof. The number of connecting positions can be suitably selected as needed, such as 2-8, preferably 3-6 and more preferably 4. These connecting positions are preferably located at symmetric positions on the circumference.

As shown in Fig. 2, in a preferred embodiment, the annual disk 2 is connected to the inner wall of the premixing tank 10 at four circumferentially symmetric connecting positions along its outer peripheral portion. At the same time, radially inward grooves 12 are provided in the sector between two adjacent connecting positions. In this way, materials can flow through the passage formed by the central hole 11 of the annular disk 2 and the passage formed by the groove 12 and the inner wall of the mixing tank 10. Therefore, the flowability of materials to be mixed in the premixing tank 10 can be further increased, thus facilitating a sufficient mixing of materials.

In an example not shown, the premixing tank 10 is provided with two or more annual disks 2, in which the corresponding grooves in different annual disks 2 are not in alignment with each other. Instead, these corresponding grooves will be in different angular positions. Therefore, the passage formed by the groove 12 and the inner wall of the premixing tank 10 is non-linear in the longitudinal direction of the premixing tank 10. Consequently, the mixing effect of materials is further enhanced.

Area of grooves 12 should ensure a maximum flowing area for materials under the condition that the integral strength of the annual disk 2 should not be damaged. For example, area of grooves 12 could be 1/4-1/2, preferably 1/3, of area of the sector between two adjacent connecting positions along the annular disk 2. The bottom of groove 12 can have a shape of line or curve, which is preferably symmetric with respect to the radius axis passing through the middle point of line connecting the two corresponding connecting positions.

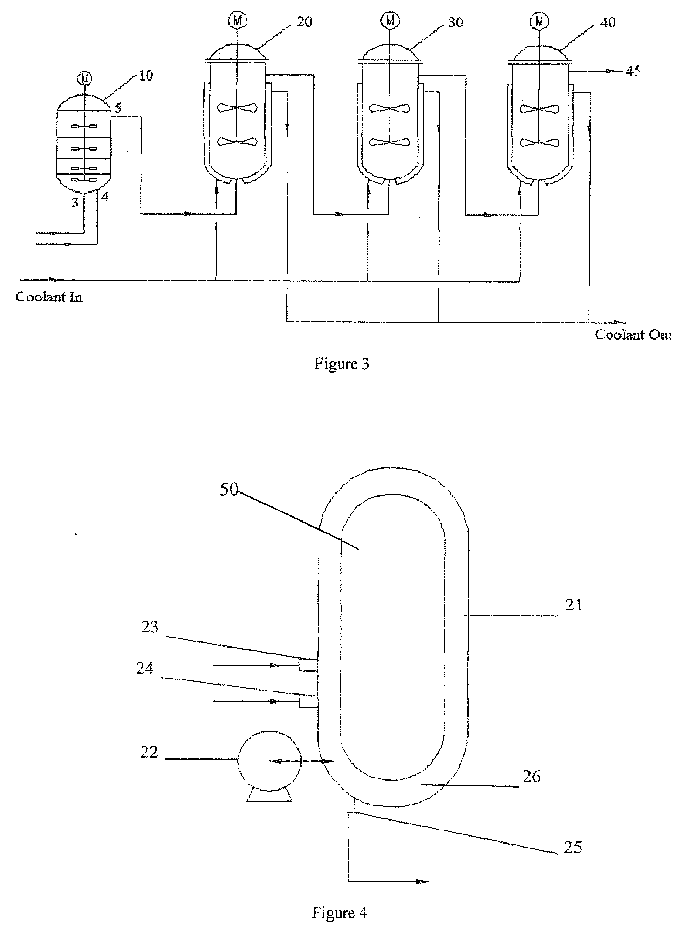

As shown in Fig.4, the premixing system according to the present disclosure comprises a loop mixer 50 and an axial flow pump 22. Said loop mixer 50 includes a straight pipe section 21, an elbow 26, and the elbow 26 connects with said straight pipe section 21 to form a loop mixer 50. During the mixing process, the polymerization materials to be mixed, i.e., the catalyst, the solvent and the reaction monomers are introduced into the loop mixer 50 by the two material inlets 23,24 arranged in the lower portion of the loop mixer 50, wherein the reaction monomers and the catalyst are introduced into the loop mixer 50 through different inlets. The raw materials to be mixed flow circularly and rapidly in the loop mixer 50 under the action of the axial flow pump 22. A dead mixing zone is basically not formed in the loop mixer 50. All the reaction materials are fully mixed under turbulence to form a highly uniform mixture, which is then discharge from the material outlet 25 arranged in the bottom of the mixer 50 for further treatment. Said axial flow pump can be any axial flow pumps that are commonly used in the field

In the following the premixing tank and the loop mixer according to the present disclosure will be explained in detail with an example of a raw material premixing tank and a loop mixer used for preparing rare-earth isoprene rubber. However, it should be understood that the mixing tank and the loop mixer according to the present disclosure can be used in any occasions where reaction materials need to be mixed.

### [Example 1]

Under normal temperature and pressure, isoprene monomers (14.6kg/h, polymerization grade, obtained commercially), solvent (95kg/h, cyclohexane, obtained commercially) and neodymium catalyst (2.9kg/h, with concentration of 6×10⁻⁶molNd/ml) are pre-cooled in a traditional heat exchanger, the temperature for pre-cooling being -5°C. The molar ration of the compositions of the neodymium catalyst used here to isoprene, i.e., neodymium neodecanoate: triisobutylaluminum: diethylaluminum chloride equals 50:1:10:3. The catalyst is diluted to said concentration with cyclohexane. The catalyst and the solvent are pre-mixed before the pre-cooling process in a heat exchanger, and isoprene monomers are pre-cooled in a separate heat exchanger. The coolant used here is 3 wt% of cold NaCl solution.

The pre-cooled compositions of polymerization materials are introduced into the premixing tank 10 according to the present disclosure, wherein the catalyst and the solvent are introduced into the premixing tank via the inlet 3 while isoprene monomers are introduced into the premixing tank via the inlet 4.

The premixing tank used here has a volume of 5L, a cylinder diameter of 150mm and a height of 300mm. Four stirring blades are provided in the premixing tank. The diameter of the stirring blade is half of that of the premixing tank. The stirring blades rotate at 400 rpm. The lowest stirring blade is placed at a distance of 30mm from the bottom of the premixing tank. The axial spaces between every two adjacent stirring blades are 56mm, 70mm and 98mm along the bottom-up direction. Three annular disks are arranged in the premixing tank, each of them being placed at the longitudinal middle point between two adjacent stirring blades. The diameter of the central hole of the annular disk is 1.15 times greater than that of the stirring blade. The annular disk is connected to the inner wall of the premixing tank at four circumferentially symmetric connecting positions on the outer peripheral portion thereof. The annular disk is provided with four grooves, each having an area equal to 1/3 of the area of the corresponding sector.

Under the action of the stirring blades and the annular disks, polymerization materials are sufficiently mixed in the premixing tank, with an average resident time of 2.0min therein. Thus polymerization materials premixed homogenously are obtained.

Subsequently, the polymerization process is conducted as shown in Fig. 3. Materials discharged from the outlet 5 of the premixing tank 10 flow through a first reactor 20, a second reactor 30 and a third reactor 40 in sequence. The average resident time in each reactor is 20min, and the reaction temperatures in the reactors are 30°C, 40°C and 50°C respectively. The polymerization product is discharged from an outlet 45.

According to Example 1, the conversion rate of isoprene monomers is 60 wt% at the outlet of the first reactor, and is 96 wt% at the outlet of the last reactor.

Finally, the rare-earth isoprene rubber thus obtained is determined in respect of the content of 1,4-isoprene with cis-configuration, the number average molecular weight and the molecular weight dispersion index. The results are shown in Table 1.

### [Example 2]

Example 2 is substantially the same as Example 1, but differs from Example 1 in that the diameter of the central hole of the annular disk is 1.3 times greater than that of the corresponding stirring blade.

According to Example 2, the conversion rate of isoprene monomers is 60.5 wt% at the outlet of the first reactor, and is 96.2 wt% at the outlet of the last reactor.

The rare-earth isoprene rubber thus obtained is determined and the results are shown in Table 1.

### [Example 3]

Example 3 is substantially the same as Example 1, but differs from Example 1 in that the total feeding amount of polymerization materials is reduced while the mass ratio of isoprene monomers, catalyst and solvent is kept unchanged. The average resident time of polymerization materials in the premixing tank is 5 min.

According to Example 3, the conversion rate of isoprene monomers is 65wt% at the outlet of the first reactor, and is 98.3 wt% at the outlet of the last reactor.

The rare-earth isoprene rubber thus obtained is determined and the results are shown in Table 1.

### [Example 4]

Example 4 is substantially the same as Example 1, but differs from Example 1 in that the diameter of the stirring blade is equal to 2/3 of that of the premixing tank, and the total feeding amount of polymerization materials is reduced while the mass ratio of isoprene monomers, catalyst and solvent is kept unchanged. The average resident time of polymerization materials in the premixing tank is 5 min.

According to Example 4, the conversion rate of isoprene monomers is 66 wt% at the outlet of the first reactor, and is 98.3 wt% at the outlet of the last reactor.

The rare-earth isoprene rubber thus obtained is determined and the results are shown in Table 1.

### [Comparative Example 1]

Comparative Example 1 is substantially the same as Example 1, but differs from Example I in that only the second stirring blade from bottom in the premixing tank is kept, while other stirring blades and all annular disks are removed.

According to Comparative Example 1, the conversion rate of isoprene monomers is 40 wt% at the outlet of the first reactor, and is 80 wt% at the outlet of the last reactor.

The rare-earth isoprene rubber thus obtained is determined and the results are shown in Table 1.

### [Comparative Example 2]

Comparative Example 2 is substantially the same as Comparative Example 1, but differs from Comparative Example 1 in that the total feeding amount of polymerization materials is reduced while the mass ratio of isoprene monomers, catalyst and solvent is kept unchanged. The average resident time of polymerization materials in the premixing tank is 5 min.

According to Comparative Example 2, the conversion rate of isoprene monomers is 43 wt% at the outlet of the first reactor, and is 84 wt% at the outlet of the last reactor.

The rare-earth isoprene rubber thus obtained is determined and the results are shown in Table 1.

### [Comparative Example 3]

Comparative Example 3 is substantially the same as Comparative Example 1, but differs from Comparative Example 1 in that the amount of catalyst in Comparative Example 3 is 4 times greater than that in Comparative Example 1.

According to Comparative Example 3, the conversion rate of isoprene monomers is 55 wt% at the outlet of the first reactor, and is 93 wt% at the outlet of the last reactor.

The rare-earth isoprene rubber thus obtained is determined and the results are shown in Table 1.

### [Example 5]

Under normal temperature and pressure, isoprene monomers (23.5kg/h, polymerization grade, obtained commercially), solvent (152kg/h, cyclohexane, obtained commercially) and neodymium based catalyst (4.5kg/h, with concentration of 6×10⁻⁶molNd/ml, solvent of cyclohexane, the mol ratio of isoprene: neodymium neodecanoate: triisobutylaluminum: diethylaluminum chloride being 50:1:10:3, and said catalyst is prepared by the applicant and the prepared catalyst is diluted to said concentration with cyclohexane) are pre-cooled in a traditional heat exchanger, the temperature for pre-cooling being -5°C. The catalyst and the solvent are pre-mixed before being pre-cooled in one heat exchanger, and the isoprene monomers are pre-cooled in a separate heat exchanger. The coolant used here is 3 wt% of cold NaCl solution.

The pre-cooled compositions of the polymerization materials are introduced into the loop mixer individually, in which the catalyst and the solvent are introduced into the loop mixer via the material inlet 4 after flowing out af the heat exchanger while the isoprene monomers are introduced into the loop mixer via the material inlet 3 after flowing out of the heat exchanger.

The raw materials to be mixed are flowing circularly and rapidly in the loop mixer under the action of the axial flow pump, wherein the materials in the loop reactor has a ratio of the circular flow Qᵣ inside said loop reactor to the outlet flow Qₒᵤₜ from the loop reactor, i.e. Qᵣ/Qₒᵤₜ, is 100, and the polymerization materials have an average resident time in each reactor of 1.5min.

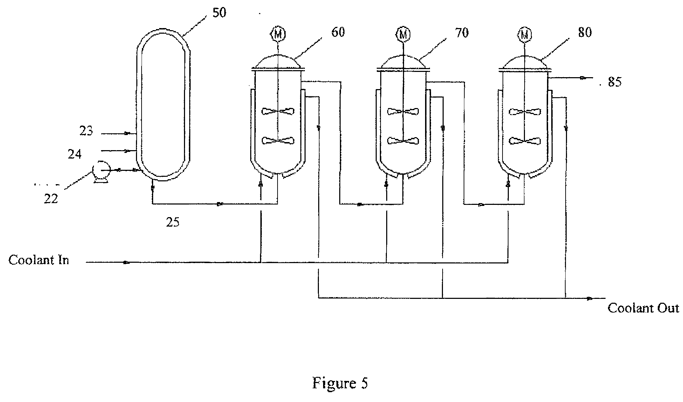

Subsequently, the polymerization process is conducted as shown in Fig. 5. Materials discharged from the outlet 25 of the loop mixer 50 flow through a first reactor 60, a second reactor 70 and a third reactor 80 in sequence. The average resident time in each reactor is 30min, and the reaction temperatures in the reactors are 30°C, 40°C and 50°C respectively. Polymerization product is discharged from the outlet 85 of the third reactor 80.

According to this example, the final conversion rate of the isoprene monomers is 95 wt%.

Finally, the rare-earth isoprene rubber thus obtained is determined in respect of the content of cis-1,4-confguration, the number average molecular weight and the molecular weight dispersion index. The results are shown in Table 2.

### [Example 6]

Example 6 is substantially the same as Example 5, but differs from Example 5 in that the Qᵣ/Qₒᵤₜ in the loop mixer is 125. According to this example, the final conversion rate of the isoprene monomers is 96wt% The analysis result of the rare-earth isoprene rubber thus obtained after reaction is shown in Table 2.

### [Example 7]

Example 7 is substantially the same as Example 5, but differs from Example 5 in that the Qᵣ/Qₒᵤₜ in the loop mixer is 140. According to Example 7, the final conversion rate of the isoprene monomers is 96.3wt%. The analysis results of the rare-earth isoprene rubber thus obtained after reaction is shown in Table 2.

### [Example 8]

Example 8 is substantially the same as Example 5, but differs from Example 5 in that the Qᵣ/Qₒᵤₜ in said loop mixer is 125, the total feeding amount of polymerization materials is reduced while the mass ratio of the isoprene monomers, the catalyst and the solvent is kept unchanged when compared with Example 1. The average resident time of polymerization materials in the premixing tank is 2.5 min. According to Example 8, the final conversion rate of the isoprene monomers is 96.8wt%. The analysis results of the rare-earth isoprene rubber thus obtained after reaction is shown in Table 2.

### [Example 9]

Example 9 is substantially the same as Example 5, but differs from Example 5 in that the Qᵣ/Qₒᵤₜ in said loop mixer is 125, the total feeding amount of polymerization materials is reduced while the mass ratio of the isoprene monomers, the catalyst and the solvent is kept unchanged when compared with Example 1. The average resident time of the polymerization materials in the premixing tank is 4min. According to Example 9, the final conversion rate of the isoprene monomers is 97.2wt%. The analysis results of the rare-earth isoprene rubber thus obtained after reaction is shown in Table 2.

### [Comparative Example 4]

Comparative Example 4 is substantially the same as Example 5, but differs from Example 5 in that each component of the polymerization materials after being pre-cooled is directly fed into each reactor during the polymerization process, and is free of a premixing stage in the loop mixer. According to Comparative Example 4, the final conversion rate of the isoprene monomers is 90wt%. The analysis results of the rare-earth isoprene rubber thus obtained after reaction is shown in Table 2.

### [Comparative Example 5]

Comparative Example 5 is substantially the same as Example 5, but differs from Example 5 in that the amount of catalyst in Comparative Example 5 is increased to 2 times of that in Example 5. According to Comparative Example 5, the final conversion rate of the isoprene monomers is 95wt%. The analysis results of the rare-earth isoprene rubber thus obtained after reaction is shown in Table 2.

**Table 1**

| Examples | Quality of the rare-earth isoprene rubber obtained | | |
|---|---|---|---|
| | content of 1,4-isoprene with cis-configuration | number average molecular weight | molecular weight distribution index |
| Example 1 | 98 wt% | 420,000 | 2.9 |
| Example 2 | 98.2 wt% | 430,000 | 2.9 |
| Example 3 | 98.8 wt% | 450,000 | 2.65 |
| Example 4 | 99 wt% | 450,000 | 2.7 |
| Comparative Example 1 | 80 wt% | 300,000 | 3.6 |
| Comparative Example 2 | 82 wt% | 320,000 | 3.5 |
| Comparative Example 3 | 90 wt% | 370,000 | 3.2 |

**Table 2**

| Examples | Quality of the rare-earth isoprene rubber obtained | | |
|---|---|---|---|
| | content of cis-1,4-configuration | number average molecular weight | molecular weight distribution index |
| Example 5 | 96 wt% | 370,000 | 3 |
| Example 6 | 97 wt% | 380,000 | 3 |
| Example 7 | 97.5 wt% | 389,000 | 2.9 |
| Example 8 | 98 wt% | 396,000 | 2.8 |
| Example 9 | 98.3 wt% | 402,000 | 2.8 |
| Comparative Example 4 | 94 wt% | 340,000 | 3.5 |
| Comparative Example 5 | 96.5 wt% | 380,000 | 3.1 |

From Table 1 and Table 2 it can be seen, when the premixing system according to the present disclosure is used as a raw material premixing tank for premixing materials in the process of preparing rare-earth isoprene rubber, the rare-earth isoprene rubber obtained can enjoy a high content of cis-1,4-configuration, a large number average molecular weight and a low molecular weight dispersion index. Therefore, the rare-earth isoprene rubber produced by the premixing tank according to the present disclosure has a better quality. In addition, with the premixing system according to the present disclosure, the amount of the catalyst used can be significantly reduced.

## Claims

1. A neodymium based homogeneous phase rare-earth catalyst prepared by a process comprising the following steps:
1) in an inert solvent, preparing a mixture solution comprising a neodymium carboxylate compound as component a, a halogen-containing compound as component c, and a conjugated diene as component d;
2) adding an organo-aluminum compound as component b to the mixture obtained from step 1) to obtain said neodymium based homogeneous phase rare-earth catalyst;
wherein said organo-aluminum compound is selected from alkylaluminiums with a general formula of AlR₃ and alkylaluminium hydrides with a general formula of AlHR₂, in which R is a C₁-C₆ linear or branched alkyl group, and the molar ratio of the components in the catalyst is 1:5-30:2-10:35-65 in view of a:b:c:d; preferably, the molar ratio of the components in the catalyst is 1:10-25:2-4:37-60 in view of a:b:c:d.

2. The catalyst according to claim 1, wherein said neodymium carboxylate compound is a neodymium C₁-C₂₀ carboxylate, preferably a neodymium C₆-C₁₀ carboxylate, and more preferably neodymium naphthenate, neodymium octanoate, neodymium isooctanoate, neodymium pelargonate, neodymium neodecanoate or neodymium decanoate.

3. The catalyst according to claim 1, wherein said organo-aluminum is selected from trimethyl aluminum, triethyl aluminum, tripropyl aluminum, tributyl aluminum, tripentyl aluminum, trihexyl aluminum, diethyl aluminum hydride and dibutyl aluminum hydride, preferably selected from tributyl aluminum and dibutyl aluminum hydride, and more preferably selected from triisobutyl aluminum and diisobutyl aluminum hydride.

4. The catalyst according to claim 1, wherein said halogen-containing compound is selected from alkylaluminum chlorides with a general formula of AlR₂X, sesquialkyl aluminum halides with a general formula of Al₂R₃X₃, wherein R is an ethyl, propyl, isopropyl, butyl, isobutyl or tertbutyl group, X is bromine or chlorine, preferably selected from diethyl aluminum chloride, sesquiethyl aluminum chloride and diisobutyl aluminum chloride;
or said halogen-containing compound is selected from halogenated hydrocarbons with a general formula of RX, silicon-containing halides, and halogens, wherein R is a C₁-C₆ alkyl group and X is bromine or chlorine, preferably selected from halogenated methyl silanes, silicon tetrachloride, sesquiisobutyl aluminum chloride, liquid bromine, chlorine gas, benzyl chloride, benzyl bromide and tert-butyl chloride.

5. The catalyst according to claim 1, wherein said conjugated diene compound is a C₄-C₆ conjugated diene, preferably selected from butadiene, isoprene, 1,3-pentadiene, 1,3-hexadiene and 2,3-dimethyl butadiene, and more preferably selected from butadiene and isoprene, and most preferably isoprene.

6. A neodymium based homogeneous phase rare-earth catalyst prepared by a process comprising the following steps:
1) in an inert solvent, preparing a mixture solution comprising a neodymium carboxylate compound as component a, a halogen-containing compound as component c, a carboxylic acid as component e and a conjugated diene as component d;
2) adding an organo-aluminum as compound b to the mixture obtained from step 1) to obtain said neodymium based homogeneous phase rare-earth catalyst,
wherein said organo-aluminum compound is selected from alkylaluminums with a general formula of AlR₃ and alkylaluminum hydrides with a general formula of AlHR₂, in which R is a C₁-C₆ linear or branched alkyl group, the molar ratio of the components in the catalyst is 1:10-30:2-5:25-100:0.2-4 in view of a:b:c:d:e; preferably, the molar ratio of the components in the catalyst is 1:10-30:2-5:26-70:0.2-4 in view ofa:b:c:d:e.

7. The catalyst according to claim 6, wherein in said catalyst, said neodymium carboxylate compound is an neodymium C₁-C₂₀ carboxylate, preferably a neodymium C₆-C₁₀ carboxylate, and more preferably neodymium naphthenate, neodymium octanoate, neodymium isooctanoate, neodymium pelargonate, neodymium neodecanoate and neodymium decanoate.

8. The catalyst according to claim 6, wherein said organo-aluminum is selected from trimethyl aluminum, triethyl aluminum, tripropyl aluminum, tributyl aluminum, tripentyl aluminum, trihexyl aluminum, diethyl aluminum hydride, dipropyl aluminum hydride, dibutyl aluminum hydride, dipentyl aluminum hydride and dihexyl aluminum hydride, preferably selected from triethyl aluminum, tributyl aluminum, diethyl aluminum hydride and dibutyl aluminum hydride.

9. The catalyst according to claim 6, wherein said halogen-containing compound is selected from alkylaluminum chlorides with a general formula of AlR₂X, and sesquialkyl aluminum halides with a general formula of Al₂R₃X₃, wherein R is a C₁-C₆ alkyl group, X is bromine or chlorine, preferably selected from diethyl aluminum chloride, sesquiethyl aluminum chloride and diisobutyl aluminum chloride.

10. The catalyst according to claim 6, wherein said conjugated diene compound is a C₄-C₆ conjugated diene, preferably selected from butadiene, isoprene, 1,3-pentadiene, 1,3-hexadiene and 2,3-dimethyl butadiene, and more preferably selected from butadiene and isoprene, and most preferably isoprene.

11. The catalyst according to claim 6, wherein said carboxylic acid is a C₅-C₁₀ carboxylic acid, preferably selected from naphthenic acid, octanoic acid, isooctanoic acid, pelargonic acid, neodecanoic acid and decanoic acid.

12. A process for preparing a conjugated diene polymer, said conjugated diene monomer is solution polymerized in a solvent in the presence of said catalyst according to any one of claims 1 to 5 and/or said catalyst according to any one of claims 6 to 11 to obtain a polymer solution; preferably, said conjugated diene is isoprene.

13. The process according to claim 12, wherein the dosage of said catalyst, based on the molar ratio of component a to the conjugated diene monomer, is 1×10⁻⁵-4×10⁻⁴, preferably 1.5×10⁻⁵-3.5×10⁻⁴.

14. The process according to claim 12, wherein the dosage of said catalyst, based on the molar ratio of the component a to the conjugated diene monomer, is 3×10⁻⁵-6×10⁻⁴.

15. The process according to claim 12, wherein during the solution polymerization or after the polymerization, an ionic surfactant is added to lower the viscosity of the polymer solution, and said ionic surfactant is preferably an anionic surfactant.

16. The process according to claim 15, wherein the adding amount of said anionic surfactant is 0.01-2wt% based on the polymer solution.

17. The process according to claim 15, wherein the anionic surfactant is added together with a polymerization reaction terminator; preferably, the anionic surfactant and water are formulated into a water solution, and then added together.

18. The process according to claim 17, wherein said anionic surfactant comprises a C₁₀-C₁₈ long-chain carboxylic acid or carboxylate thereof, preferably comprising oleic acid, sodium oleate or potassium oleate.

19. The process according to claim 17, wherein said anionic surfactant comprises a sulfonic acid or a sulfonate, and the molecular structure of said sulfonic acid and sulfonate comprises C₈-C₂₀ straight chains, branched chains, cyclic saturated or unsaturated carbon chains, preferably comprising sodium dodecylbenzene sulfonate, potassium dodecylbenzene sulfonate, sodium dodecyl sulfonate, or sodium methylene dinaphthalene sulfonate.

20. The process according to claim 17, wherein said anionic surfactant comprises a phosphate containing C₈-C₂₀ straight chains, branched chains, cyclic saturated or unsaturated carbon chains, and preferably comprises octyl phosphate, decyl phosphate, trimethyl nonyl phosphate or cetyl phosphate.

21. The process according to claim 17, wherein said anionic surfactant comprises sulfuric acid or a sulfate containing a C₈-C₂₀ straight chain, branched chain, cyclic saturated or unsaturated carbon chain, and preferably comprises sodium dodecyl sulfate, sodium oleyl alcohol sulfate, sodium octadecanol sulfate or sodium polyoxyethylene aliphatic alcohol ether sulfate.

22. The process according to claim 17, wherein said anionic surfactant comprises ether compounds structured as R-O-(CH₂CH₂O)ₙ-H, wherein R is a C₈-C₂₀ straight chain, branched chain, cyclic saturated or unsaturated carbon chain, the value of n is within the range of 3-10, and said ether compounds structured as R-O-(CH₂CH₂O)ₙ-H is preferably selected from polyoxyethylene aliphatic alcohol ether and polyoxyethylene secondary alcohol ether.

23. The process according to claim 17, wherein said anionic surfactant comprises a synthesized surfactant from natural oils or macromolecular, preferably selected from celluloses and lignins, and more preferably hydroxymethyl cellulose, sodium carboxymethyl cellulose and sodium lignin sulfate.

24. The process according to claim 12, wherein said polymerization comprises a pre-mixing step of adding the conjugated diene monomer, the neodymium based homogeneous phase rare-earth catalyst and the solvent into a pre-mixer system to pre-mix, the solution polymerization of the mixed materials being carried out subsequently.

25. The process according to claim 24, wherein said conjugated diene monomer and neodymium based homogeneous phase rare-earth catalyst are individually added into the pre-mixer system to be premixed; preferably said conjugated diene monomer and neodymium based homogeneous phase rare-earth catalyst are added into the pre-mixer system after being individually cooled.

26. The process according to claim 25, wherein the object temperature of said cooling is -30 to 20°C, preferably -20 to 10°C, and more preferably -10 to 0°C.

27. The process according to claim 24 or 25, wherein said pre-mixer system comprises an axial flow pump and a loop reactor linked with said axial flow pump, and said loop reactor comprises at least two straight pipes, elbows connecting said straight pipes to form a tubular loop, a materials outlet, and at least two material inlets.

28. The process according to claim 27, wherein the height-diameter ratio of the straight pipe section in said loop reactor is 2-100, preferably 3-50, and more preferably 4-20.

29. The process according to claim 27, wherein the materials in the loop reactor has a ratio of circular flow Qᵣ inside of said loop reactor to the outlet flow Qₒᵤₜ from the loop reactor of 100 to 140, preferably 120-130.

30. The process according to claim 27, wherein the average resident time of materials in the loop reactor is 0.5-5min, preferably 2-4min.

31. The process according to claim 24 or 25, wherein said pre-mixer system comprises a premixing tank, said premixing tank comprising,
a rotatable central shaft arranged in the premixing tank along the longitudinal direction;
at least two radial-flow stirring blades mounted on the central shaft; and
an annual disk located between two adjacent radial-flow stirring blades, wherein the central shaft passes through the annual disk, and the annual disk is connected to the inner wall of the premixing tank at the outer peripheral portion thereof.

32. The process according to claim 31, wherein the out diameter of the annual disk matches with the inner diameter of the premixing tank, and the annual disk is connected to the inner wall of the premixing tank at two or more circumferentially symmetric connecting positions on the outer peripheral portion thereof.

33. The process according to claim 31, wherein the number of connecting positions is 2 to 8, preferably 3-6, and more preferably 4.

34. The process according to claim 31, wherein said annular disk is provided with a radially inward groove between two adjacent connecting positions.

35. The process according to claim 34, wherein the bottom of the groove is symmetric with respect to the radius axis passing through the middle point of line connecting the two corresponding connecting positions.

36. The process according to claim 34, wherein the area of each groove is equal to 1/4 to 1/2, preferably 1/3, of the sector area of the annular disk between the two corresponding connecting positions.

37. The process according to claim 34, wherein said premixing tank comprises at least two annual disks, wherein a groove in an annular disk is staggered with each of corresponding grooves in other annular disks.

38. The process according to claim 37, wherein said annular disks can be arranged so that less annular disks are placed between two adjacent stirring blades in the lower region of the premixing tank than those in the upper region thereof.

39. The process according to claim 31, wherein the inner diameter of said annular disk is 1-1.5 times greater than the diameter of said stirring blade.

40. The process according to claim 31, wherein said annular disk is located at the middle point between two adjacent radial-flow stirring blades along the longitudinal direction.

41. The process according to claim 31, wherein the distance between two adjacent stirring blades can be 0.5-2 times greater than the diameter of the stirring blades.

42. The process according to claim 31, wherein the distance between two adjacent radial-flow stirring blades is gradually increased from bottom to top along the longitudinal direction.

43. The process according to claim 31, wherein a material outlet is arranged in the upper portion of the premixing tank, and a material inlet is arranged in the bottom of the premixing tank; preferably, two material inlets are arranged in the bottom of the premixing tank, wherein one is used for introducing isoprene monomer in the polymerization materials, and another is used for introducing the catalyst and solvent in the polymerization materials.

44. The process according to claim 31, wherein said premixing tank has a height-diameter ratio of 1-4, preferably 2-3.

45. The process according to claim 31, wherein the quantity of radial-flow stirring blades is 1-3, preferably 1.5-2, times greater than the height-diameter ratio of said premixing tank.

46. The process according to claim 31, wherein the diameter of said stirring blades is 1/4-2/3, preferably 1/3-1/2, of that of said premixing tank.

## Patentansprüche

1. Seltenerdkatalysator auf Neodymbasis und mit homogener Phase, hergestellt durch ein Verfahren, umfassend folgende Schritte:
1) Herstellung einer Mischungslösung, umfassend eine Neodymcarboxylatverbindung als Komponente a, eine halogenhaltige Verbindung als Komponente c und ein konjugiertes Dien als Komponente d in einem inerten Lösungsmittel,
2) Zugabe einer Organoaluminiumverbindung als Komponente b zu der aus Schritt 1) erhaltenen Mischung, unter Erhalt des Seltenerdkatalysators mit homogener Phase und auf Neodymbasis,
worin die Organoaluminiumverbindung ausgewählt ist aus Alkylaluminiumverbindungen mit der allgemeinen Formel AlR₃ und Alkylaluminiumhydriden mit der allgemeinen Formel AlHR₂, worin R eine lineare oder verzweigte C₁₋₆-Alkylgruppe ist und das molare Verhältnis der Komponente im Katalysator 1:5-30:2-10:35-65 im Hinblick auf a:b:c:d ist, bevorzugt das molare Verhältnis der Komponenten im Katalysator 1:10-25:2-4:37-60 im Hinblick auf a:b:c:d ist.

2. Katalysator nach Anspruch 1, worin die Neodymcarboxylatverbindung ein Neodym-C₁₋₂₀-carboxylat, bevorzugt Neodym-C₆₋₁₀-carboxylat und mehr bevorzugt Neodymnaphthenat, Neodymoctanoat, Neodymisooctanoat, Neodympelargonat, Neodymneodecanoat oder Noedymdecanoat ist.

3. Katalysator nach Anspruch 1, worin das Organoaluminium ausgewählt ist aus Trimethylaluminium, Triethylaluminium, Tripropylaluminium, Tributylaluminium, Tripentylaluminium, Trihexylaluminium, Diethylaluminiumhydrid und Dibutylaluminiumhydrid, bevorzugt ausgewählt ist aus Tributylaluminium und Dibutylaluminiumhydrid und mehr bevorzugt ausgewählt ist aus Triisobutylaluminium und Diisobutylaluminiumhydrid.

4. Katalysator nach Anspruch 1, worin die halogenhaltige Verbindung ausgewählt ist aus Alkylaluminiumchloriden mit der allgemeinen Formel AlR₂X, Sesquialkylaluminiumhalogeniden mit der allgemeinen Formel Al₂R₃X₃, worin R eine Ethyl-, Propyl-, Isopropyl-, Butyl-, Isobutyl- oder tert-Butyl-Gruppe ist, X Brom oder Chlor ist, bevorzugt ausgewählt aus Diethylaluminiumchlorid, Sesquiethylaluminiumchlorid und Diisobutylaluminiumchlorid,
oder worin die halogenhaltige Verbindung ausgewählt ist aus halogenierten Kohlenwasserstoffen mit der allgemeinen Formel RX, siliziumhaltigen Halogeniden und Halogenen, worin R eine C₁₋₆-Alkylgruppe ist und X Brom oder Chlor ist, bevorzugt ausgewählt aus halogenierten Methylsilanen, Siliziumtetrachlorid, Sesquiisobutylaluminiumchlorid, flüssigem Brom, Chlorgas, Benzylchlorid, Benzylbromid und tert-Butylchlorid.

5. Katalysator nach Anspruch 1, worin die konjugierte Dienverbindung ein C₄₋₆-konjugiertes Dien ist, bevorzugt ausgewählt aus Butadien, Isopren, 1,3-Pentadien, 1,3-Hexadien und 2,3-Dimethylbutadien und mehr bevorzugt ausgewählt aus Butadien und Isopren und am meisten bevorzugt Isopren.

6. Seltenerdkatalysator mit homogener Phase und auf Neodymbasis, hergestellt durch ein Verfahren, umfassend folgende Schritte:
1) Herstellung einer Mischungslösung, umfassend eine Neodymcarboxylatverbindung als Komponente a, eine halogenhaltige Verbindung als Komponente c, eine Carbonsäure als Komponente e und ein konjugiertes Dien als Komponente d in einem inerten Lösungsmittel,
2) Zugabe eines Organoaluminiums als Verbindung b zu der Mischung, erhalten aus Schritt 1), unter Erhalt des Seltenerdkatalysators mit homogener Phase und auf Neodymbasis,
worin die Organoaluminiumverbindung ausgewählt ist aus Alkylaluminiumverbindungen mit der allgemeinen Formel AlR₃ und Alkylaluminiumhydriden mit der allgemeinen Formel AlHR₂, worin R eine lineare oder verzweigte C₁₋₆-Alkylgruppe ist und das molare Verhältnis der Komponente im Katalysator 1:10-30:2-5:25-100:0,2-4 im Hinblick auf a:b:c:d:e ist, bevorzugt das molare Verhältnis der Komponenten im Katalysator 1:10-30:2-5:26-70:0,2-4 im Hinblick auf a:b:c:d:e ist.

7. Katalysator nach Anspruch 6, worin in dem Katalysator die Neodymcarboxylatverbindung ein Neodym-C₁₋₂₀-carboxylat, bevorzugt Neodym-C₆₋₁₀-carboxylat und mehr bevorzugt Neodymnaphthenat, Neodymoctanoat, Neodymisooctanoat, Neodympelargonat, Neodymneodecanoat oder Noedymdecanoat ist.

8. Katalysator nach Anspruch 6, worin das Organoaluminium ausgewählt ist aus Trimethylaluminium, Triethylaluminium, Tripropylaluminium, Tributylaluminium, Tripentylaluminium, Trihexylaluminium, Diethylaluminiumhydrid, Dipropylaluminiumhydrid, Dibutylaluminiumhydrid, Dipentylaluminiumhydrid und Dihexylaluminiumhydrid, bevorzugt ausgewählt ist aus Triethylaluminium, Tributylaluminium, Diethylaluminiumhydrid und Dibutylaluminiumhydrid.

9. Katalysator nach Anspruch 6, worin die halogenhaltige Verbindung ausgewählt ist aus Alkylaluminiumchloriden mit der allgemeinen Formel AlR₂X und Sesquialkylaluminiumhalogeniden mit der allgemeinen Formel Al₂R₃X₃, worin R eine C₁₋₆-Alkylgruppe ist, X Brom oder Chlor ist, bevorzugt ausgewählt aus Diethylaluminiumchlorid, Sesquiethylaluminiumchlorid und Diisobutylaluminiumchlorid.

10. Katalysator nach Anspruch 6, worin die konjugierte Dienverbindung ein C₄₋₆-konjugiertes Dien ist, bevorzugt ausgewählt aus Butadien, Isopren, 1,3-Pentadien, 1,3-Hexadien und 2,3-Dimethylbutadien und mehr bevorzugt ausgewählt aus Butadien und Isopren und am meisten bevorzugt Isopren.

11. Katalysator nach Anspruch 6, worin die Carbonsäure eine C₅₋₁₀-Carbonsäure ist, bevorzugt ausgewählt aus Naphthensäure, Octansäure, Isooctansäure, Pelargonsäure, Neodecansäure und Decansäure.

12. Verfahren zur Herstellung eines konjugierten Dienpolymers, wobei das konjugierte Dienmonomer in einem Lösungsmittel in der Gegenwart des Katalysators nach einem der Ansprüche 1 bis 5 und/oder des Katalysators nach einem der Ansprüche 6 bis 11 lösungspolymerisiert wird, unter Erhalt einer Polymerlösung, bevorzugt worin das konjugierte Dien Isopren ist.

13. Verfahren nach Anspruch 12, worin die Dosis des Katalysators auf der Basis des molaren Verhältnisses der Komponente a zum konjugierten Dienmonomer 1×10⁻⁵ - 4×10⁻⁴, bevorzugt 1,5×10⁻⁵ - 3,5×10⁻⁴ ist.

14. Verfahren nach Anspruch 12, worin die Dosis des Katalysators auf der Basis des molaren Verhältnisses der Komponente a zum konjugierten Dienmonomer 3×10⁻⁵ - 6×10⁻⁴ ist.

15. Verfahren nach Anspruch 12, worin während der Lösungspolymerisation oder nach der Polymerisation ein ionisches Tensid zur Erniedrigung der Viskosität der Polymerlösung zugegeben wird und das ionische Tensid bevorzugt ein anionisches Tensid ist.

16. Verfahren nach Anspruch 15, worin die Zugabemenge des anionischen Tensides 0,01-2 Gew.-% auf der Basis der Polymerlösung ist.

17. Verfahren nach Anspruch 15, worin das anionische Tensid zusammen mit einem Polymerisationsreaktions-Beendigungsmittel zugegeben wird, bevorzugt das anionische Tensid und Wasser zu einer Wasserlösung formuliert und dann zusammen zugegeben werden.

18. Verfahren nach Anspruch 17, worin das anionische Tensid eine langkettige C₁₀₋₁₈-Carbonsäure oder Carboxylat davon enthält, bevorzugt Oleinsäure, Natriumoleat oder Kaliumoleat enthält.

19. Verfahren nach Anspruch 17, worin das anionische Tensid eine Sulfonsäure oder Sulfonat enthält und die Molekularstruktur der Sulfonsäure und des Sulfonates C₈₋₂₀ gerade Ketten, verzweigte Ketten, cyclische, gesättigte oder ungesättigte Kohlenstoffketten enthält, bevorzugt Natriumdodecylbenzolsulfonat, Kaliumdodecylbenzolsulfonat, Natriumdodecylsulfonat oder Natriummethylendinaphthalinsulfonat enthält.

20. Verfahren nach Anspruch 17, worin das anionische Tensid ein Phosphat mit C₈₋₂₀ geraden Ketten, verzweigten Ketten, cyclischen gesättigten oder ungesättigten Kohlenstoffketten enthält und bevorzugt Octylphosphat, Decylphosphat, Dimethylnonylphosphat oder Cetylphosphat enthält.

21. Verfahren nach Anspruch 17, worin das anionische Tensid Schwefelsäure oder ein Sulfat mit einer C₈₋₂₀ geraden Kette, verzweigten Kette, cyclischen gesättigten oder ungesättigten Kohlenstoffkette enthält und bevorzugt Natriumdodecylsulfat, Natriumoleylalkoholsulfat, Natriumoctadecanolsulfat oder Natriumpolyoxyethylen aliphatisches Alkoholethersulfat enthält.

22. Verfahren nach Anspruch 17, worin das anionische Tensid Etherverbindungen mit der Formel R-O-(CH₂CH₂O)ₙ-H enthält, worin R eine C₈₋₂₀ geradkettige, verzweigte, cyclische gesättigte oder ungesättigte Kohlenstoffkette ist, der Wert von n innerhalb des Bereiches von 3-10 ist und die Etherverbindungen mit der Formel R-O-(CH₂CH₂O)ₙ-H bevorzugt ausgewählt sind aus Polyoxyethylen-aliphatischem Alkoholether und Polyoxyethylen-sekundärem Alkoholether.

23. Verfahren nach Anspruch 17, worin das anionische Tensid ein synthetisiertes Tensid von natürlichen Ölen oder makromolekularen Stoffen enthält, bevorzugt aus Zellulosen und Ligninen und mehr bevorzugt aus Hydroxymethyl zellulose, Natriumcarboxymethyl zellulose und Natiumligninsulfat ausgewählt ist.

24. Verfahren nach Anspruch 12, worin die Polymerisation einen Vormischschritt der Zugabe des konjugierten Dienmonomers, des Seltenerdkatalysators mit homogener Phase und auf Neodymbasis und des Lösungsmittels zu einem Vormischungssystem zum Vormischen enthält, wobei die Lösungspolymerisation der gemischten Materialien anschließend durchgeführt wird.

25. Verfahren nach Anspruch 24, worin das konjugierte Dienmonomer und der Seltenerdkatalysator mit homogener Phase und auf Neodymbasis individuell in das Vormischersystem zum Vormischen gegeben werden, bevorzugt worin das konjugierte Dienmonomer und der Seltenerdkatalysator mit homogener Phase und auf Neodymbasis zu dem Vormischungssystem nach individuellem Kühlen gegeben werden.

26. Verfahren nach Anspruch 25, worin die Objekttemperatur des Kühlens -30 bis 20°C, bevorzugt -20 bis 10°C und mehr bevorzugt -10 bis 0°C ist.

27. Verfahren nach Anspruch 24 oder 25, worin das Vormischersystem eine axiale Fließpumpe und einen Schleifenreaktor, der mit der axialen Fließpumpe verbunden ist, enthält und der Schleifenreaktor zumindest zwei gerade Rohre, Winkelstücke, die die geraden Rohre verbinden, zur Bildung einer röhrenförmigen Schleife, einen Auslass für Materialien und zumindest zwei Materialeinlässe enthält.

28. Verfahren nach Anspruch 27, worin das Höhen-Durchmesserverhältnis des geraden Rohrbereiches in dem Schleifenreaktor 2-100, bevorzugt 3-50 und mehr bevorzugt 4-20 ist.

29. Verfahren nach Anspruch 27, worin die Materialien im Schleifenreaktor ein Verhältnis des zirkulären Flusses Qᵣ im Inneren des Schleifenreaktors zum Auslassfluss Qₒᵤₜ von dem Schleifenreaktor von 100-140, bevorzugt 120-130 hat.

30. Verfahren nach Anspruch 27, worin die durchschnittliche Verweilzeit der Materialien im Schleifenreaktor 0,5-5 Minuten, bevorzugt 2-4 Minuten ist.

31. Verfahren nach Anspruch 24 oder 25, worin das Vormischersystem einen Vormischerbehälter enthält, wobei der Vormischerbehälter enthält:
einen rotierbaren zentralen Schaft, angeordnet in dem Vormischungsbehälter entlang der longitudinalen Richtung,
zumindest zwei Radialfluss-Rührblätter, die an dem zentralen Schaft befestigt sind, und
eine ringförmige Scheibe, lokalisiert zwischen den beiden benachbarten Radialfluss-Rührblättern, worin der zentrale Schaft durch die ringförmige Scheibe hindurchgeht und die ringförmige Scheibe mit der inneren Wand des Vormischungsbehälters an dem äußeren peripheren Bereich davon verbunden ist.

32. Verfahren nach Anspruch 31, worin der Außendurchmesser der ringförmigen Scheibe an den Innendurchmesser des Vormischungsbehälters passt und die ringförmige Scheibe mit der Innenwand des Vormischungsbehälters an zwei oder mehreren symmetrischen Umgebungsverbindungspositionen an dem äußeren peripheren Bereich davon verbunden ist.

33. Verfahren nach Anspruch 31, worin die Zahl der verbindenden Positionen 2-8, bevorzugt 3-6 und mehr bevorzugt 4 ist.

34. Verfahren nach Anspruch 31, worin die ringförmige Scheibe mit einer Radialeinwärtsrille zwischen den beiden benachbarten verbindenden Positionen vorgesehen ist.

35. Verfahren nach Anspruch 34, worin der Boden der Rille symmetrisch in Bezug auf die Radiusachse ist, die durch den Mittelpunkt der Linie hindurchgeht, die die beiden entsprechenden Verbindungspositionen verbindet.

36. Verfahren nach Anspruch 34, worin die Fläche einer jeden Rille gleich 1/4 bis 1/2, bevorzugt 1/3 der Sektorfläche der ringförmigen Scheibe zwischen den beiden entsprechenden Verbindungspositionen ist.

37. Verfahren nach Anspruch 34, worin der Vormischungsbehälter zumindest zwei ringförmige Scheiben enthält, worin eine Rille in einer ringförmigen Scheibe mit jeder der entsprechenden Rillen in anderen ringförmigen Scheiben gestapelt ist.

38. Verfahren nach Anspruch 37, worin die ringförmigen Scheiben angeordnet sein können, so dass weniger ringförmige Scheiben zwischen zwei benachbarten Rührblättern in dem unteren Bereich des Vormischungsbehälters als bei dem oberen Bereich davon angeordnet sind.

39. Verfahren nach Anspruch 31, worin der Innendurchmesser der ringförmigen Scheiben das 1- bis 1,5-fache des Durchmessers des Rührblatts ist.

40. Verfahren nach Anspruch 31, worin die ringförmige Scheibe an dem Mittelpunkt zwischen zwei benachbarten Radialfluss-Rührblättern entlang der longitudinalen Richtung lokalisiert ist.

41. Verfahren nach Anspruch 31, worin der Abstand zwischen zwei benachbarten Rührblättern das 0,5- bis 2-fache des Durchmessers der Rührblätter sein kann.

42. Verfahren nach Anspruch 31, worin der Abstand zwischen zwei benachbarten Radialfluss-Rührblättern graduell vom Boden bis zur Spitze entlang der longitudinalen Richtung erhöht ist.

43. Verfahren nach Anspruch 31, worin ein Materialauslass in dem oberen Bereich des Vormischungsbehälters angeordnet ist und ein Materialeinlass im Boden des Vormischungsbehälters angeordnet ist, bevorzugt zwei Materialeinlässe im Boden des Vormischungsbehälters angeordnet sind, worin einer zum Einführen von Isoprenmonomer in die Polymerisationsmaterialien verwendet wird und ein anderer zum Einführen des Katalysators und des Lösungsmittels in die Polymerisationsmaterialien verwendet wird.

44. Verfahren nach Anspruch 31, worin der Vormischungsbehälter ein Höhen-Durchmesserverhältnis von 1-4, bevorzugt 2-3 hat.

45. Verfahren nach Anspruch 31, worin die Menge der Radialfluss-Rührblätter das 1- bis 3-fache, bevorzugt 1,5- bis 2-fache des Höhen-Durchmesserverhältnisses des Vormischungsbehälters ist.

46. Verfahren nach Anspruch 31, worin der Durchmesser der Rührblätter 1/4-2/3, bevorzugt 1/3-1/2 zu dem des Vormischungsbehälters ist.

## Revendications

1. Catalyseur de terre rare à phase homogène à base de néodyme préparé par un procédé comprenant les étapes suivantes :
1) dans un solvant inerte, la préparation d'une solution de mélange comprenant un composé de carboxylate de néodyme en tant que composant a, un composé contenant un halogène en tant que composant c et un diène conjugué en tant que composant d ;
2) l'ajout d'un composé d'organoaluminium en tant que composant b au mélange obtenu à l'étape 1) pour obtenir ledit catalyseur de terre rare à phase homogène à base de néodyme ;
dans lequel ledit composé d'organoaluminium est choisi parmi les alkylaluminiums ayant la formule générale AlR₃ et les hydrures d'alkylaluminium ayant la formule générale AlHR₂, où R est un groupement alkyle linéaire ou ramifié en C₁-C₆ et le rapport molaire des composants du catalyseur est de 1:5 à 30:2 à 10:35 à 65 dans l'optique de a:b:c:d ; de préférence, le rapport molaire des composants du catalyseur est de 1:10 à 25:2 à 4:37 à 60 dans l'optique de a:b:c:d.

2. Catalyseur selon la revendication 1, dans lequel ledit composé de carboxylate de néodyme est un carboxylate de néodyme en C₁-C₂₀, de préférence un carboxylate de néodyme en C₆-C₁₀, et de manière encore préférée le naphténate de néodyme, l'octanoate de néodyme, l'isooctanoate de néodyme, le pélargonate de néodyme, le néodécanoate de néodyme ou le décanoate de néodyme.

3. Catalyseur selon la revendication 1, dans lequel ledit composé d'organoaluminium est choisi parmi le triméthylaluminium, le triéthylaluminium, le tripropylaluminium, le tributylaluminium, le tripentylaluminium, le trihexylaluminium, l'hydrure de diéthylaluminium et l'hydrure de dibutylaluminium, de préférence choisi parmi le tributylaluminium et l'hydrure de dibutylaluminium, et de manière encore préférée choisi parmi le triisobutylaluminium et l'hydrure de diisobutylaluminium.

4. Catalyseur selon la revendication 1, dans lequel ledit composé contenant un halogène est choisi parmi les chlorures d'alkylaluminium ayant la formule générale AlR₂X, les halogénures de sesquialkylaluminium ayant la formule générale Al₂R₃X₃, où R est un groupement éthyle, propyle, isopropyle, butyle, isobutyle ou tert-butyle, X représente le brome ou le chlore, de préférence choisi parmi le chlorure de diéthylaluminium, le chlorure de sesquiéthylaluminium et le chlorure de diisobutylaluminium ;
ou ledit composé contenant un halogène est choisi parmi les hydrocarbures halogénés ayant la formule générale RX, les halogénures contenant du silicium et les halogènes, où R est un groupement alkyle en C₁-C₆ et X représente le brome ou le chlore, de préférence choisi parmi les silanes de méthyle halogénés, le tétrachlorure de silicium, le chlorure de sesquiisobutylaluminium, le brome liquide, le chlore gazeux, le chlorure de benzyle, le bromure de benzyle et le chlorure de tert-butyle.

5. Catalyseur selon la revendication 1, dans lequel ledit composé de diène conjugué est un diène conjugué en C₄-C₆, de préférence choisi parmi le butadiène, l'isoprène, le 1,3-pentadiène, le 1,3-hexadiène et le 2,3-diméthylbutadiène, et de manière encore préférée choisi parmi le butadiène et l'isoprène, et de manière préférée entre toutes l'isoprène.

6. Catalyseur de terre rare à phase homogène à base de néodyme préparé par un procédé comprenant les étapes suivantes :
1) dans un solvant inerte, la préparation d'une solution de mélange comprenant un composé de carboxylate de néodyme en tant que composant a, un composé contenant un halogène en tant que composant c, un acide carboxylique en tant que composant e et un diène conjugué en tant que composant d ;
2) l'ajout d'un organoaluminium en tant que composant b au mélange obtenu à l'étape 1) pour obtenir ledit catalyseur de terre rare à phase homogène à base de néodyme,
dans lequel ledit composé d'organoaluminium est choisi parmi les alkylaluminiums ayant la formule générale AlR₃ et les hydrures d'alkylaluminium ayant la formule générale AlHR₂, où R est un groupement alkyle linéaire ou ramifié en C₁-C₆, le rapport molaire des composants du catalyseur est de 1:10 à 30:2 à 5:25 à 100:0,2 à 4 dans l'optique de a:b:c:d:e ; de préférence, le rapport molaire des composants du catalyseur est de 1:10 à 30:2 à 5:26 à 70:0,2 à 4 dans l'optique de a:b:c:d:e.

7. Catalyseur selon la revendication 6, dans lequel, dans ledit catalyseur, ledit composé de carboxylate de néodyme est un carboxylate de néodyme en C₁-C₂₀, de préférence un carboxylate de néodyme en C₆-C₁₀, et de manière encore préférée le naphténate de néodyme, l'octanoate de néodyme, l'isooctanoate de néodyme, le pélargonate de néodyme, le néodécanoate de néodyme et le décanoate de néodyme.

8. Catalyseur selon la revendication 6, dans lequel ledit organoaluminium est choisi parmi le triméthylaluminium, le triéthylaluminium, le tripropylaluminium, le tributylaluminium, le tripentylaluminium, le trihexylaluminium, l'hydrure de diéthylaluminium, l'hydrure de dipropylaluminium, l'hydrure de dibutylaluminium, l'hydrure de dipentylaluminium et l'hydrure de dihexylaluminium, de préférence choisi parmi le triéthylaluminium, le tributylaluminium, l'hydrure de diéthylaluminium et l'hydrure de dibutylaluminium.

9. Catalyseur selon la revendication 6, dans lequel ledit composé contenant un halogène est choisi parmi les chlorures d'alkylaluminium ayant la formule générale AlR₂X et les halogénures de sesquialkylaluminium ayant la formule générale Al₂R₃X₃, où R est un groupement alkyle en C₁-C₆, X représente le brome ou le chlore, de préférence choisi parmi le chlorure de diéthylaluminium, le chlorure de sesquiéthylaluminium et le chlorure de diisobutylaluminium.

10. Catalyseur selon la revendication 6, dans lequel ledit composé de diène conjugué est un diène conjugué en C₄-C₆, de préférence choisi parmi le butadiène, l'isoprène, le 1,3-pentadiène, le 1,3-hexadiène et le 2,3-diméthylbutadiène, et de manière encore préférée choisi parmi le butadiène et l'isoprène, et de manière préférée entre toutes l'isoprène.

11. Catalyseur selon la revendication 6, dans lequel ledit acide carboxylique est un acide carboxylique en C₅-C₁₀, de préférence choisi parmi l'acide naphténique, l'acide octanoïque, l'acide isooctanoïque, l'acide pélargonique, l'acide néodécanoïque et l'acide décanoïque.

12. Procédé de préparation d'un polymère de diène conjugué, dans lequel ledit monomère de diène conjugué est polymérisé en solution dans un solvant en présence dudit catalyseur selon l'une quelconque des revendications 1 à 5 et/ou dudit catalyseur selon l'une quelconque des revendications 6 à 11, pour obtenir une solution de polymère ; de préférence, ledit diène conjugué est l'isoprène.

13. Procédé selon la revendication 12, dans lequel le dosage dudit catalyseur, basé sur le rapport molaire du composant a au monomère de diène conjugué, est de 1 x 10⁻⁵ à 4 x 10⁻⁴, de préférence de 1,5 x 10⁻⁵ à 3, 5 x 10⁻⁴.

14. Procédé selon la revendication 12, dans lequel le dosage dudit catalyseur, basé sur le rapport molaire du composant a au monomère de diène conjugué, est de 3 x 10⁻⁵ à 6 x 10⁻⁴.

15. Procédé selon la revendication 12, dans lequel, au cours de la polymérisation en solution ou après la polymérisation, un agent tensioactif ionique est ajouté pour abaisser la viscosité de la solution de polymère et ledit agent tensioactif ionique est de préférence un agent tensioactif anionique.

16. Procédé selon la revendication 15, dans lequel la quantité ajoutée dudit agent tensioactif anionique est de 0,01 à 2% en poids sur la base de la solution de polymère.

17. Procédé selon la revendication 15, dans lequel l'agent tensioactif anionique est ajouté conjointement avec un terminateur de réaction de polymérisation ; de préférence, l'agent tensioactif anionique et l'eau sont formulés en solution aqueuse, puis ajoutés ensemble.

18. Procédé selon la revendication 17, dans lequel ledit agent tensioactif anionique comprend un acide carboxylique à longue chaîne en C₁₀-C₁₈ ou un carboxylate de celui-ci, comprenant de préférence l'acide oléique, l'oléate de sodium ou l'oléate de potassium.

19. Procédé selon la revendication 17, dans lequel ledit agent tensioactif anionique comprend un acide sulfonique ou un sulfonate et la structure moléculaire desdits acide sulfonique et sulfonate comprend des chaînes droites en C₈-C₂₀, des chaînes ramifiées, des chaînes carbonées saturées ou insaturées cycliques, comprenant de préférence le dodécylbenzènesulfonate de sodium, le dodécylbenzènesulfonate de potassium, le dodécylsulfonate de sodium ou le méthylènedinaphtalènesulfonate de sodium.

20. Procédé selon la revendication 17, dans lequel ledit agent tensioactif anionique comprend un phosphate contenant des chaînes droites en C₈-C₂₀, des chaînes ramifiées, des chaînes carbonées saturées ou insaturées cycliques et comprend de préférence le phosphate d'octyle, le phosphate de décyle, le phosphate de triméthylnonyle ou le phosphate de cétyle.

21. Procédé selon la revendication 17, dans lequel ledit agent tensioactif anionique comprend l'acide sulfurique ou un sulfate contenant une chaîne droite en C₈-C₂₀, une chaîne ramifiée, une chaîne carbonée saturée ou insaturée cyclique et comprend de préférence le dodécylsulfate de sodium, le sulfate d'alcool oléique de sodium, le sulfate d'octadécanol de sodium ou l'éthersulfate d'alcool aliphatique de polyoxyéthylène de sodium.

22. Procédé selon la revendication 17, dans lequel ledit agent tensioactif anionique comprend des composés d'éthers ayant la structure R-O-(CH₂CH₂O)ₙ-H, où R est une chaîne droite en C₈-C₂₀, une chaîne ramifiée, une chaîne carbonée saturée ou insaturée cyclique, la valeur de n est comprise dans la plage de 3 à 10 et lesdits composés d'éthers ayant la structure R-O-(CH₂CH₂O)ₙ-H sont de préférence choisis parmi l'éther d'alcool aliphatique de polyoxyéthylène et l'éther d'alcool secondaire de polyoxyéthylène.

23. Procédé selon la revendication 17, dans lequel ledit agent tensioactif anionique comprend un agent tensioactif synthétisé à partir d'huiles naturelles ou macromoléculaire, de préférence choisi parmi les celluloses et les lignines, et de manière encore préférée l'hydroxyméthylcellulose, la carboxyméthylcellulose sodique et le sulfate de lignine de sodium.

24. Procédé selon la revendication 12, dans lequel ladite polymérisation comprend une étape de pré-mélange consistant à ajouter le monomère de diène conjugué, le catalyseur de terre rare à phase homogène à base de néodyme et le solvant dans un système pré-mélangeur afin de les pré-mélanger, la polymérisation en solution des matériaux mélangés étant effectuée ultérieurement.

25. Procédé selon la revendication 24, dans lequel ledit monomère de diène conjugué et ledit catalyseur de terre rare à phase homogène à base de néodyme sont ajoutés individuellement dans le système pré-mélangeur pour les pré-mélanger ; de préférence ledit monomère de diène conjugué et ledit catalyseur de terre rare à phase homogène à base de néodyme sont ajoutés dans le système pré-mélangeur après avoir été refroidis individuellement.

26. Procédé selon la revendication 25, dans lequel la température en question dudit refroidissement est de -30 à 20°C, de préférence de -20 à 10 °C, et de manière encore préférée de -10 à 0°C.

27. Procédé selon la revendication 24 ou 25, dans lequel ledit système pré-mélangeur comprend une pompe à écoulement axial et un réacteur en boucle relié à ladite pompe à écoulement axial et ledit réacteur en boucle comprend au moins deux tubes droits, des coudes reliant lesdits tubes droits pour former une boucle tubulaire, une sortie de matériaux et au moins deux admissions de matériaux.

28. Procédé selon la revendication 27, dans lequel le rapport hauteur/diamètre de la section de tube droite dans ledit réacteur en boucle est de 2 à 100, de préférence de 3 à 50, et de manière encore préférée de 4 à 20.

29. Procédé selon la revendication 27, dans lequel les matériaux dans le réacteur en boucle ont un rapport d'écoulement circulaire Qᵣ à l'intérieur dudit réacteur en boucle à l'écoulement à la sortie Qₒᵤₜ du réacteur en boucle de 100 à 140, de préférence de 120 à 130.

30. Procédé selon la revendication 27, dans lequel le temps de séjour moyen des matériaux dans le réacteur en boucle est de 0,5 à 5 min, de préférence de 2 à 4 min.

31. Procédé selon la revendication 24 ou 25, dans lequel ledit système pré-mélangeur comprend un réservoir de pré-mélange, ledit réservoir de pré-mélange comprenant :
un arbre central rotatif disposé dans le réservoir de pré-mélange le long de la direction longitudinale ;
au moins deux pales d'agitation à écoulement radial fixées sur l'arbre central ; et
un disque annulaire situé entre deux pales d'agitation à écoulement radial adjacentes, dans lequel l'arbre central passe à travers le disque annulaire et le disque annulaire est relié à la paroi intérieure du réservoir de pré-mélange sur sa partie périphérique extérieure.

32. Procédé selon la revendication 31, dans lequel le diamètre extérieur du disque annulaire correspond au diamètre intérieur du réservoir de pré-mélange et le disque annulaire est relié à la paroi intérieure du réservoir de pré-mélange dans deux ou plus de positions de connexion symétriques sur la circonférence sur sa partie périphérique extérieure.

33. Procédé selon la revendication 31, dans lequel le nombre de positions de connexion est de 2 à 8, de préférence de 3 à 6, et de manière encore préférée de 4.

34. Procédé selon la revendication 31, dans lequel ledit disque annulaire est doté d'une rainure radialement intérieure entre deux positions de connexion adjacentes.

35. Procédé selon la revendication 34, dans lequel le fond de la rainure est symétrique par rapport à l'axe radial passant par le point central de la ligne reliant les deux positions de connexion correspondantes.

36. Procédé selon la revendication 34, dans lequel la surface de chaque rainure est égale à 1/4 à 1/2, de préférence de 1/3 de la surface de secteur du disque annulaire entre les deux positions de connexion correspondantes.

37. Procédé selon la revendication 34, dans lequel ledit réservoir de pré-mélange comprend au moins deux disques annulaires, dans lequel une rainure d'un disque annulaire est décalée par rapport à chacune des rainures correspondantes des autres disques annulaires.

38. Procédé selon la revendication 37, dans lequel lesdits disques annulaires peuvent être agencés de manière qu'un nombre inférieur de disques annulaires soient placés entre deux pales d'agitation adjacentes dans la région inférieure du réservoir de pré-mélange au nombre de ceux de sa région supérieure.

39. Procédé selon la revendication 31, dans lequel le diamètre intérieur dudit disque annulaire est de 1 à 1,5 fois plus grand que le diamètre de ladite pale d'agitation.

40. Procédé selon la revendication 31, dans lequel ledit disque annulaire est situé au point central entre les deux pales d'agitation à écoulement radial adjacentes le long de la direction longitudinale.

41. Procédé selon la revendication 31, dans lequel la distance entre deux pales d'agitation adjacentes peut être de 0,5 à 2 fois plus grande que le diamètre des pales d'agitation.

42. Procédé selon la revendication 31, dans lequel la distance entre deux pales d'agitation à écoulement radial adjacentes augmente progressivement de bas en haut le long de la direction longitudinale.

43. Procédé selon la revendication 31, dans lequel une sortie de matériaux est ménagée dans la partie supérieure du réservoir de pré-mélange et une admission de matériaux est ménagée dans le fond du réservoir de pré-mélange ; de préférence, deux admissions de matériaux sont ménagées dans le fond du réservoir de pré-mélange, dans lequel l'une est utilisée pour l'introduction d'un monomère d'isoprène dans les matériaux de polymérisation et l'autre est utilisée pour l'introduction du catalyseur et du solvant dans les matériaux de polymérisation.

44. Procédé selon la revendication 31, dans lequel ledit réservoir de pré-mélange a un rapport hauteur/diamètre de 1 à 4, de préférence de 2 à 3.

45. Procédé selon la revendication 31, dans lequel la quantité de pales d'agitation à écoulement radial est de 1 à 3, de préférence de 1,5 à 2, fois plus grande que le rapport hauteur/diamètre dudit réservoir de pré-mélange.

46. Procédé selon la revendication 31, dans lequel le diamètre desdites pales d'agitation est de 1/4 à 2/3, de préférence de 1/3 à 1/2, de celui dudit réservoir de pré-mélange.
